# EUROPEAN PATENT SPECIFICATION

(11) **EP 2 568 241 B1**
(45) Date of publication and mention of the grant of the patent: **17.01.2018**
(21) Application number: 12188244.3
(22) Date of filing: 29.10.2008
(51) Int. Cl.: F25D 27/00, F25D 25/02, F25D 17/04, A23L 3/005, A23L 3/36, A23B 7/01, A23B 7/04, B05B 5/025, B05B 5/057, B05B 5/16

(54) **Refrigerator**
Kühlschrank
Réfrigérateur

(30) Priority: 31.10.2007 JP 2007282707; 27.08.2008 JP 2008218125; 16.10.2008 JP 2008267016
(43) Date of publication of application: 13.03.2013
(62) Divisional of application: 08844147.2
(73) Proprietor: Panasonic Corporation, Kadoma-shi Osaka 571-8501 (JP)
(72) Inventor: Tsujimoto, Kahoru, Osaka-shi, Osaka 540-6207 (JP); Kamisako, Toyoshi, Osaka-shi, Osaka 540-6207 (JP); Takase, Keiichi, Osaka-shi, Osaka 540-6207 (JP)
(74) Representative: Schwabe - Sandmair - Marx

(56) References cited:
- WO-A2-2007/049937
- JP-A- 2006 329 614
- JP-A- 2007 147 101

## Description

### TECHNICAL FIELD

The present invention relates to a refrigerator for storing foods such as vegetables.

### BACKGROUND ART

Recently, there is an increasing trend of vegetable farming for artificially growing vegetables by using inexpensive and long-life LED. Commonly known is a method of improving storageability, applying such technology to a refrigerator, such as a method of maintaining the freshness of vegetables or increasing the content of nutritive component during storage by applying red LED (light emitting diode), blue LED, or ultra-violet LED from above the rear. On the other hand, in order to supply the diversified needs of customers in these days, also known is a refrigerator improved not only in storageability of vegetables but also in using convenience, which uses three-primary-color LED or three-primary-color LCD (liquid crystal element) as an interior light from the viewpoint of human engineering in order to indicate the refrigerator temperature by the color of the interior light when the door is opened (for example, refer to Patent document 1).

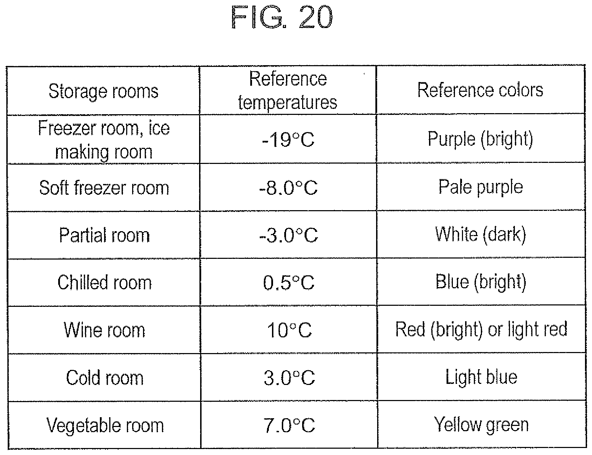

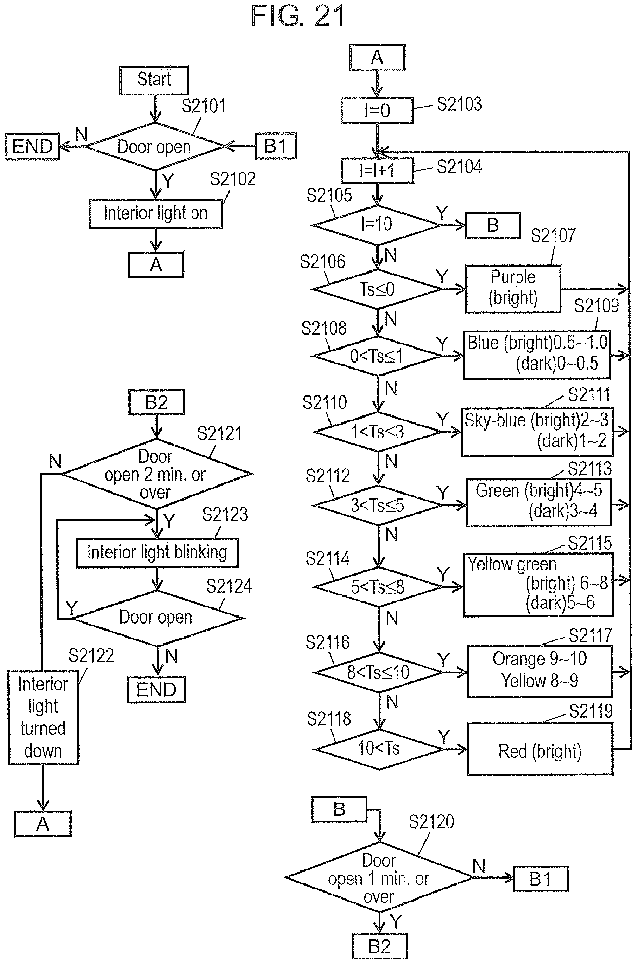

Fig. 20 is an explanatory diagram for describing the relationship between the reference temperature and reference color of each storage room of a conventional refrigerator mentioned in Patent document 1. Fig. 21 is a flow chart showing the control of an interior light of the cold room of the conventional refrigerator.

In Fig. 20, the names of storage rooms in the refrigerator are shown in the left column. The reference temperatures of storage rooms are shown in the middle column. The reference colors assigned to the storing rooms are shown in the right column corresponding to the reference temperatures.

As shown in Fig. 20, reference colors deeper in coldness are assigned to lower reference temperatures. Also, reference colors deeper in warmth are assigned to higher reference temperatures. In this way, it is possible to visually recognize the temperatures.

How to control an interior light of the cold room of a conventional refrigerator is described in the following with reference to Fig. 21. First, whether the door of the refrigerator is opened or not is checked (S2101), and when it is opened (S2101-Y), the interior light having a color light source formed of three-primary-color is turned on (S2102). And, after the interior light is turned on, repetition signal I is set to 0 (S2103). When the door of the cold room is not opened (S2101-N) in step S2101, no control is performed in the refrigerator.

After that, the color of the interior light is controlled in accordance with refrigerator temperature Ts detected by the temperature sensor formed of a thermistor disposed in the cold room every increment of repetition signal I. The control is repeated until I = 10. Since it is for the cold room, a plurality of temperature zones are previously disposed in the range of 0 °C < Ts < 10 °C of refrigerator temperature Ts for the purpose of color control, and a specific color is assigned to each temperature zone. In this case, the colors of specific temperatures zones are distinguished between the bright and dark. Also, warmer colors are assigned to higher temperature zones, and colder colors are assigned to lower temperature zones.

That is, 1 is added to repetition signal I (S2104) to check whether repetition signal I is 10 (S2105). When repetition signal I is not 10 (S2105-N), it is checked whether refrigerator temperature Ts is lower than 0 °C (S2106). When refrigerator temperature Ts is lower than 0 °C (S2106-Y), each three-primary-color LED is controlled to turn the interior light on in bright purple (S2107), and then the process goes to step S2104.

When refrigerator temperature Ts is not lower than 0 °C (S2106-N), it is checked whether refrigerator temperature Ts is lower than 1 °C (S2108). When refrigerator temperature Ts is lower than 1 °C (S2108-Y), each three-primary-color LED is controlled to turn the interior light on in bright blue whose brightness is 0.5 to 1.0 or dark blue whose brightness is 0 to 0.5 (S2109), and then the process goes to step S2104.

When refrigerator temperature Ts is not lower than 1 °C (S2108-N), it is checked whether refrigerator temperature Ts is lower than 3 °C (S2110). When refrigerator temperature Ts is lower than 3 °C (S2110-Y), each three-primary-color LED is controlled to turn the interior light on in bright sky-blue whose brightness is 2.0 to 3.0 or dark sky-blue whose brightness is 1.0 to 2.0 (S2111), and then the process goes to step S2104.

When refrigerator temperature Ts is not lower than 3 °C (S2110-N), it is checked whether refrigerator temperature Ts is lower than 5 °C (S2112). When refrigerator temperature Ts is lower than 5 °C (S2112-Y), each three-primary-color LED is controlled to turn the interior light on in bright green whose brightness is 4.0 to 5.0 or dark green whose brightness is 3.0 to 4.0 (S2113), and then the process goes to step S2104.

When refrigerator temperature Ts is not lower than 5 °C (S2112-N), it is checked whether refrigerator temperature Ts is lower than 8 °C (S2114). When refrigerator temperature Ts is lower than 8 °C (S2114-Y), each three-primary-color LED is controlled to turn the interior light on in bright yellow green whose brightness is 6.0 to 8.0 or dark yellow green whose brightness is 5.0 to 6.0 (S2115), and then the process goes to step S2104.

When refrigerator temperature Ts is not lower than 8 °C (S2114-N), it is checked whether refrigerator temperature Ts is lower than 10 °C (S2116). When refrigerator temperature Ts is lower than 10 °C (S2116-Y), each three-primary-color LED is controlled to turn the interior light on in bright orange whose brightness is 9.0 to 10.0 or dark yellow whose brightness is 8.0 to 9.0 (S2117), and then the process goes to step S2104.

When refrigerator temperature Ts is not lower than 10 °C (S2116-N), refrigerator temperature Ts is higher than 10 °C (S2118), and therefore, each three-primary-color LED is controlled to turn the interior light on in bright red (S2119), and then the process goes to step S2104.

After 1 is added to repetition signal I in step S2104, when I = 10 (S2105-Y), it is checked whether the door is opened for more than one minute (S21120). When the door is opened for more than one minute (S21120-Y), it is checked whether the door is opened for more than two minutes (S2121). As a result, when the door opening time is more than one minute and less than two minutes (S2121-N), the interior light indicating a specific color is reduced (turned down) in brightness (S2122). After that, the process goes back to step S2103, and repetition signal I is again set to 0, and in the same manner as described above, the color of the interior light is controlled in accordance with refrigerator temperature Ts detected by the temperature sensor until I = 10.

In step S2121, when the door opening time becomes more than two minutes (S2121-Y), the interior light is turned on and off (S2123), urging the user to quickly close the door. After the interior light is turned on and off, it is checked whether the door is open (S2124). As a result, when the door is still open (S2124-Y), the process goes back to step S2123, the operation of turning the interior light on and off is continued. When the door is closed (S2124-N), it is the end of control.

In step S2120, when the door is not opened for more than one minute (S2120-N), the process goes back to step S2101 to repeat the same control.

As to the interior light, three primary colors red, blue, and green are optically combined to express one color. A number of colors can be expressed by combining the three primary colors. Also, as to the installing position of the interior light, it is installed on a wall surface near the cold air discharge port, another wall surface, or top surface of the cold room, and is buried in the place.

Thus, since three-primary-color LED or three-primary-color LCD to be changed in color is used as the color light source of the interior light, the refrigerator temperature can be indicated by the color of interior light in accordance with the temperature detected by the temperature sensor when the door is opened. Further, since the relation of the temperature detected by the temperature sensor and the color indication can be freely set, the temperature change caused due to opening of the door can be instantaneously and clearly noticed to the user.

That is, in the conventional refrigerator mentioned in Patent document 1, the color of interior light is optionally set in accordance with the refrigerator temperature, thereby improving the using convenience.

In the conventional refrigerator, the color of interior light is changed by using three-primary-color light in accordance with the refrigerator temperature when the door is opened. Accordingly, it gives a strong impression to the user's vague sense of feeling colors rather than displaying the refrigerator temperature with a numerical value, enabling sensuously easy recognition of temperature rise and improving the using convenience. However, a sensuous color tone is different from a color tone that is good for foods. For example, visible radiation is not good for meat, fish and the like which are desirable to be stored in the dark from the viewpoint of quality. On the other hand, it is possible to improve storageability by applying a specific optical wavelength to vegetables. However, if a color tone that meets the user's sense of feeling is lighted to the vegetables in order to improve the using convenience, it will be unable to improve the storageability.

Patent document 1: Unexamined Japanese Patent Publication 2004-286333.

JP 2006 329614 A discloses a refrigerator being provided with light sources arranged inside the refrigerator to emit an ultraviolet ray, and a controller is provided in a refrigerator main body capable of controlling turning on and off of the light sources.

JP 2007 147101 A discloses to improve the moisture contents of fruits and vegetables by spraying fine mist on the fruits and vegetables by a mist spraying device while alternately irradiating two types of light with different wave lengths.

WO 2007/049937 A2 discloses a refrigerator. The refrigerator includes a main body which has a cooling chamber and a freezing chamber, a storage chamber which is provided in the cooling chamber to store foodstuffs, an irradiation device which irradiates light within a visible light region correspondingly to color of the foodstuffs stored in the storage chamber, an optical deodorization module which includes an ultraviolet light irradiation device which is mounted to the storage chamber to irradiate ultraviolet light and a photocatalyst filter which receives the ultraviolet light from the ultraviolet light irradiation device and is coated with a photocatalyst agent, and a control unit which controls the irradiation device and the ultraviolet light irradiation device.

JP 2005 030761 A discloses a refrigerator performing an efficient weak photoirradiation in a vegetable chamber in order to keep freshness of green leaf vegetables.

JP 2004 293990 A discloses a refrigerator having a cold air circulating passage to a storage case to decrease the leakage of heat to the outside.

### DISCLOSURE OF THE INVENTION

An object of the invention is to provide a refrigerator having containers which improve the storageability of different objects.

The present invention is defined in claim 1.

Preferred embodiments are defined in the dependent claims.

### BRIEF DESCRIPTION OF DRAWINGS

Fig. 1 is a vertically sectional view of a refrigerator in the example 1 of the present invention.
Fig. 2A is an explanatory diagram for describing the change in amount of vitamin C during storage of paprika in the refrigerator in the example.
Fig. 2B is a flow chart showing the control of the refrigerator in the example.
Fig. 3 is a front view of a refrigerator in the example 2.
Fig. 4 is a vertically sectional view of the refrigerator in the example.
Fig. 5 is a front view of a vegetable room of a refrigerator in the embodiment of the present invention.
Fig. 6 is a vertical sectional view of a vegetable room of the refrigerator in the embodiment.
Fig. 7A is a perspective view of a vegetable room of the refrigerator in the embodiment.
Fig. 7B is a perspective view of another vegetable room of the refrigerator in the embodiment.
Fig. 8 is a sectional view near a water gathering portion of a refrigerator in the example 4.
Fig. 9 is a function block diagram of the refrigerator in the example.
Fig. 10 illustrates an image of sterilization of the refrigerator in the example.
Fig. 11 shows the effect of sterilizing bacteria in an experimental box, assuming the refrigerator in the example.
Fig. 12 illustrates a mold suppression image of the refrigerator in the example.
Fig. 13 is a diagram showing an image of sterilizing mold in an experimental box, assuming the refrigerator in the example.
Fig. 14 illustrates an anti-virus image of the refrigerator in the example.
Fig. 15 shows the effect of anti-virus in an experimental box, assuming the refrigerator in the example.
Fig. 16 is a vertically sectional view of a refrigerator in example 5.
Fig. 17 is a front view of an essential portion showing the back of a vegetable room of the refrigerator in the example.
Fig. 18 is a sectional view along the 18 - 18 line in Fig. 17 as viewed in the direction of the arrow with respect to a peripheral portion of an electrostatic mist making device disposed in a vegetable room in the example.
Fig. 19 is a sectional view of a refrigerator in the example 9.
Fig. 20 is an explanatory diagram for describing relation of reference temperatures and reference colors of each storage room of a conventional refrigerator.
Fig. 21 is a flow chart showing the control of an interior light of a cold room of the conventional refrigerator.

### DESCRIPTION OF REFERENCE MARKS

1 Main body
2, 110, 504, 604 Cold room
3,130, 508, 608 Freezer room
4, 120, 405, 507 Vegetable room
5, 506 Ice making room
6, 505 Temperature changeable room
7 Cold room rotary door
8 Temperature changeable room drawer type door
9 Ice making room drawer type door
10 Vegetable room drawer type door
11 Freezer room drawer type door
12 Machine room
13, 200, 237, 437, 590, 680 Light source
14 Operation panel
15 Rear cover
16, 609 Compressor
17 Detector
20 Evaporator
21, 513, 613 Cooling fan
22, 171, 503, 603 Inner box
23, 172, 502, 602 Outer box
24, 580, 601 Foamed heat insulator
25 Vacuum insulator
31 Gasket
34 Door pocket
35 Storage case
36, 617 Machine room
37 Control board
100, 500 Refrigerator
111a, 111b, 111c, 618, 434 Door
112A, 112B, 512, 703 Evaporator
115, 706 Heat insulating wall
121, 619, 620 Food container
121a Lower container
121b Upper container
122, 141 Lid
127 Opening
170 Storage box
173, 552 Heat insulator
210, 472 Partition
211, 212 Mist outlet
213, 610 Cold air discharge port
214, 615 Cold air suction port
220 Antibacterial device
414, 531, 631 Electrostatic mist making device
423 Water gathering plate
430 Water gathering plate temperature detector
431 Hinge
432 Cover
433 Container
438 Diffusion plate
439 Vegetable room temperature detector
440 Vegetable room humidity detector
441 Door opening/closing detector
424, 554 Heater
443 Cooling unit
425 Fan unit
451 Nucleic acid
452 Cytoplasm
453, 453a Cell membrane
454 Mist
460 Spore
461 Mycelium
462, 470 OH radical
471 Virus
510 Cooling room
511, 714 Back partition wall
511a, 650 Concave
511b Deepest concave
514 Radiant heater
515 Drain pan
516 Drain tube
517 Evaporating tray
518 Drawer door
519 Lower container
520 Upper container
522 Casing
523, 525 Partition wall
524 Vegetable room discharge port
526 Vegetable room suction port
532, 632 Mist port
533 Voltage feeder
534, 634 Cooling pin
534a Convex
534b End portion
535, 635 Electrode of making to mist
536 Opposed electrode
537, 637 Outer case
538 Humidity supply port
539 Part of making to mist
541, 712 Freezer room discharge air passage
546 Controller
551 Back partition wall surface
561, 621, 721 Partition plate
614 Defrost heater
658 Cooling pin heater
701 Thermo-change room
704 High-temperature side evaporator
722 Cold room fan
723 Cold room partition plate
724 Cold room air passage
725 Thermo-change room discharge port
726 Thermo-change room suction port

### PREFERRED EMBODIMENT FOR CARRYING OUT THE INVENTION

An embodiment of the present invention will be described in the following with reference to the drawings. The present invention is not limited by the embodiment.

### Example 1

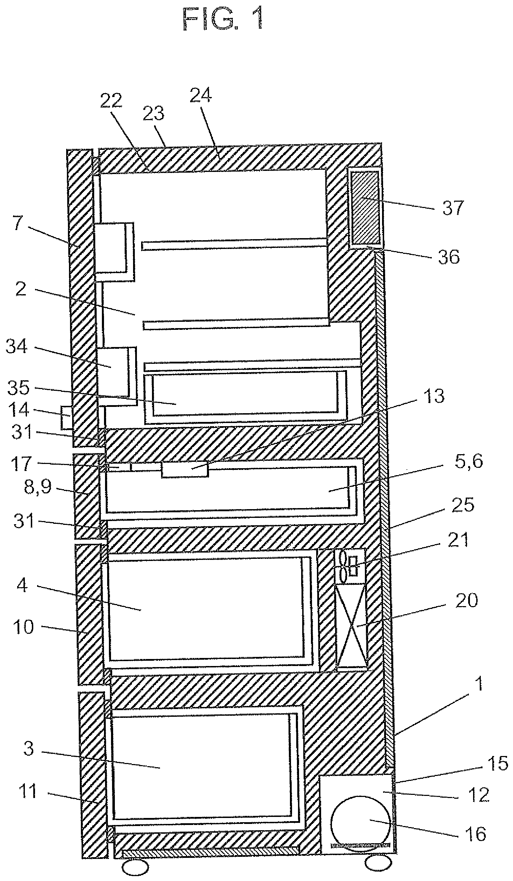

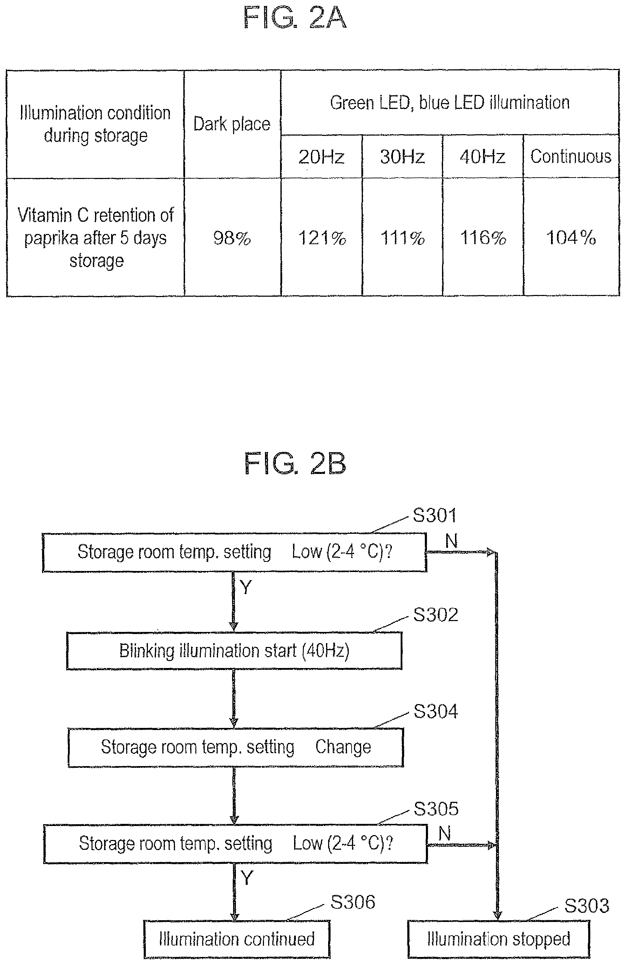

Fig. 1 is a vertically sectional view of a refrigerator in the example 1, vertically cutting it out to separate into the right and left sections. Fig. 2 is an explanatory diagram for describing the change in amount of vitamin C during storage of paprika in the refrigerator of the example.

In Fig. 1, main body 1 comprises a heat insulating wall formed by pouring foamed heat insulator 24 into the space between inner box 22 formed by vacuum molding of resin such as ABS and outer box 23 using a metallic material such as pre-coat steel sheet. Foamed heat insulator 24 used is, for example, hard urethane foam, phenol foam, or styrene foam. It is better to use hydrocarbon type cyclopentane as a foam material from the viewpoint of preventing global warming.

Also, in the space formed by inner box 22 and outer box 23 before foaming, vacuum insulator 25 is required to be thin and flat so that it can be disposed in the wall of main body 1. Further, the bonding member such as hot melt is applied to the entire affixing surface of vacuum insulator 25 so as to avoid intrusion of air into the bonded portion. Vacuum insulator 25 is integrated with foamed heat insulator 24 to configure main body 1. Thus, heat insulation can be enhanced by vacuum insulator 25 having heat insulating capacity 5 to 20 times higher as compared with foamed heat insulator 24.

Main body 1 is divided into a plurality of heat insulated sections, which is configured in that a rotary door system is employed for the upper heat insulated section and a drawer system for the lower heat insulated section. First, cold room 2 of rotary door type is positioned at the top. Temperature changeable room 6 of drawer type and ice making room 5 of drawer type are arranged thereunder on the right and left. Vegetable room 4 of drawer type is disposed thereunder. Freezer room 3 of drawer type is positioned under vegetable room 4. Each of the heat insulated sections is provided with a heat insulating door via gasket 31. Cold room rotary door 7, temperature changeable room drawer type door 8, ice making room drawer type door 9, vegetable room drawer type door 10, and freezer room drawer type door 11 are arranged in order from top to bottom. Temperature changeable room drawer type door 8 and ice making camber drawer type door 9 are arranged on the right and left.

Cold room rotary door 7 has door pocket 34 as a storage space, and there are provided a plurality of storage shelves in the refrigerator. Also, storage case 35 is disposed at the lowest portion of cold room 2.

The lower limit temperature of cold room 2 is usually set to 1 to 5 °C so the foods stored will be kept refrigerated without freezing. However, it is sometimes possible for the user to freely change the set temperature depending upon the foods stored. Also, in order to maintain the freshness of wine, root vegetables or the like, for example, the temperature is sometimes set a little higher about 10 °C.

Also, storage case 35 is set to a relatively low temperature, -3 to 1 °C for example, in order to improve the freshness of meat or fish processed foods, dairy products, etc. Vegetable room 4 is often set to same temperature as for cold room 2 or a littler higher temperature ranging from 2 °C to 7 °C. The lower the temperature, the freshness of leaf vegetables will be maintained for a longer period of time.

The temperature setting of temperature changeable room 6 can be changed by the user. A specified temperature setting can be made in a range from the freezer room temperature zone to the cold room and vegetable room temperature zones. The temperature in temperature changeable room 6 can be adjusted by operating the operation panel 14 disposed on cold room rotary door 7. The temperature in temperature changeable room 6 is detected by detector 17. Also, ice making room 5 is an independent ice storage room, which is equipped with an automatic ice making device (not shown) capable of automatically making and storing ice. Since the purpose of the freezing temperature zone is to store ice, it is also possible to set the freezing temperature relatively higher than the freezing temperature zone.

Freezer room 3 is usually set to - 22 to - 18 °C for the freezing purpose. However, in order to improve the freezer storage condition, the temperature is sometimes set to as low as - 30 °C or - 25 °C.

Main body 1 is provided with first machine room 12 formed by depressing the rear bottom thereof. Also, second machine room 36 is disposed in the rear wall surface above the first machine room 12.

The refrigeration cycle comprises compressor 16 disposed in first machine room 12, capillary (not shown) that is a condenser and pressure reducer, and evaporator 20 which are connected to each other in an annular fashion. Evaporator 20 executes forced convection heat exchange by means of cooling fan 21. The condenser not shown is allowable to be air-cooled by using cooling fan 21 or to be a self-air-cooled type fitted to the inner side of outer box 23 in a way of excellent heat transfer. Further, the condenser is preferable to be formed by combining pipes disposed on the partition between the heat insulating doors of rooms for drip-proofing purpose.

Also, it is allowable to use a plurality of evaporators in different ways in accordance with the room configuration or temperature setting by using a flow passage controller such as an electric three-way valve or to change over a plurality of capillaries or to perform gas cutting during suspension of compressor 16.

Control board 37 for operating the refrigeration cycle is installed in second machine room 36 and is closed with a removable cover (not shown). Further, first machine room 12 is also nearly closed with a removable rear cover 15.

Also, evaporator 20 that is the component equipment of the refrigeration cycle is disposed at the rear portion of vegetable room 4 positioned at the middle stage together with cooling fan 21. In this way, it is possible to maximize the volume and depth of freezer room 3 as a storage room at the lowest stage.

With vegetable room 4 at the middle stage and freezer room 3 at the lowest stage structurally reversed, it is possible to maximize the volume and depth of vegetable room 4.

Light source 13 is installed on the top surface in temperature changeable room 6 in such manner that the inside of temperature changeable room 6 is illuminated by the light turned on. When taking in and out the foods, the user opens the temperature changeable room drawer type door 8, then the light applied from light source 13 leaks out of the room. This enables the user to recognize the light and the color tone of the light. Also, in this example, light source 13 includes a plurality of light sources, and these light sources emit light having different color tones. In addition, the operation of turning on and off the light sources is performed through control board 37.

The operation of the refrigerator having such a configuration will be described in the following. First, the operation of the refrigeration cycle is described. The refrigeration cycle is operated by the signal from control board 37 in accordance with the temperature set in the refrigerator in order to perform the cooling operation. The refrigerant with high temperature and pressure discharged by the operation of compressor 16 is heat-dissipated, condensed and liquefied by means of the condenser, reduced in pressure by the capillary to become a liquid refrigerant with low temperature and pressure, and goes to evaporator 20.

With cooling fan 21 operated, the refrigerant in evaporator 20 is heat-exchanged with the air in the refrigerator to be evaporated and vaporized. Each room is cooled by distributing the low-temperature air by means of a damper (not shown) or the like. Also, in case a plurality of evaporators 20 or pressure reducers are used, a passage controller will be disposed to supply the refrigerant to evaporators 20. The refrigerant coming out of evaporator 20 is sucked into compressor 16. Such a cycle operation is repeated to perform cooling in the refrigerator.

In temperature changeable room 6, the temperature can be changed in several stages by operation panel 14 in a range from the freezing temperature zone to the refrigerating temperature zone in accordance with the user's purpose and preference. In this example, the following five temperatures can be selected as the temperature of temperature changeable room 6. The temperatures include vegetable room temperature 4 to 7 °C, cold room temperature 1 °C to 3 °C, freezer temperature - 15 °C to - 20 °C, middle temperature - 2 °C to - 5 °C (partial temperature), and chilled temperature 0 °C. When the user selects a temperature by using operation panel 14, light of a predetermined color tone is simultaneously applied from light source 13 for each temperature zone selected.

Also, in this example, light source 13 is installed in an attempt to display an effective function to fruits or vegetables in particular. Generally, in the minus temperature zone of lower than 0 °C, an effect of activating fruits or vegetables cannot be obtained. Therefore, it is designed so that light source 13 does not turn on in the minus temperature zone of lower than 0 °C. Thus, in the present example, there is provided a forcible stopping mechanism which may execute forcible stop of light source 13 according to the temperature zones of storage rooms.

LED elements are used for light source 13. Elements which emit light with wavelength regions of green, blue, and UV-A (ultraviolet ray) are disposed on same board, and it is possible to change over several colors by controlling the light.

Also, in this example, the light employed is blue light whose wavelength for penetration of light into the surfaces of fruits or vegetables stored is 470nm in central wavelength, ranging from 435 to 480nm including the peripheral wavelength. This is because, if the wavelength is out of the range, it is probably unable to obtain a practically useful effect of light penetration into surface of fruits or vegetables. Also used is green light whose wavelength for penetration of light into the interior of fruits or vegetables is 520nm in central wavelength, ranging from 500 to 560nm including the peripheral wavelength. Similarly, this is because, if the wavelength is out of the range, it is probably unable to obtain a practically useful effect of light penetration into the interior of fruits or vegetables. Also, blue LED is used for blue light, and green LED is used for green light. The intensity of light applied from light source 13 having blue LED and green LED for the object (fruit and vegetable) is desirable to be in a range from 5 to 500Lx.

As to the intensity of light applied, if the intensity is less than 5Lx, the increase of vitamin will hardly occur with the light applied. In addition, if the intensity is less than 5Lx, the user as a customer will be hard to recognize the light turned on in opening/closing of the door. Accordingly, when actually mounted in the refrigerator, it will be difficult to obtain the effect of enhancing the eagerness of the customer who buys the product. Also, when actually used, it is difficult for the user to feel the effect of increasing vitamin or the like that is visually recognized in actual use.

On the other hand, if the intensity exceeds 500Lx, the light will be too strong, and there is a possibility that transpiration of the fruits or vegetables is promoted causing their freshness to be lowered. Also, if the light applied is refracted or changed in color, it sometimes gives rise to deterioration of functional quality. Also, in opening or closing the door, if the light is too strong, the user as a customer will be rather hard to feel the cooling and refreshing effect of the refrigerator.

Through the above description, it can be said that the light is effective in the illumination range from 5 to 500Lx. The more preferable intensity of light source 13 ranges from 20 to 100Lx. In this illumination range, it is possible to increase vitamin in terms of function and also effectively suppress the transpiration of fruits or vegetables. Further, from the functional point of view, the user in opening/closing the door is able to feel the effect of application of light from the light source, and it is more preferable as an illumination range that allows the user to feel coolness and freshness.

Also, the intensity of green light is desirable to be higher than the intensity of blue light. In this example, it is configured in that the illumination of green LED is about 3 to 10 times greater in illumination ratio as compared with blue LED.

In an actual product, when the level of the illumination ratio is confirmed, the level of illumination can be checked by using an illumination meter with respect to the storing space itself. Specifically, in case of two-color illumination at the same time, the colors are illuminated one color each by operating a switch of the control board or the like, and the illumination level in each wavelength or each color can be checked by measuring the illumination.

Green light has a wavelength that is less in side reaction to fruits or vegetables, and hardly gives bad influences to fruits and vegetable even when the light is applied in relatively strong illumination internally promoting photosynthesis. Therefore, the amount of vitamin in fruits or vegetables can be increased by increasing the illumination of green light to be penetrated into the fruits or vegetables. That is, it is effective to make the intensity of green light applied higher than the intensity of blue light applied because the amount of vitamin can be increased without deterioration of fruit and vegetable quality. As a result of experiments, it has been found that the illumination of light is effective to be set so that the illumination of green light ranges from about 3 to 10 times that of blue light. That is, if it is less than 3 times, the effect is not enough to increase the amount of vitamin in the fruits or vegetables. If the level exceeds 10 times, the effect of increasing the amount of vitamin in surfaces of fruits or vegetables cannot be obtained as expected. It is difficult to obtain the effect of increasing the amount of vitamin in fruit and vegetable surfaces when the level of illumination exceeds 10 times that of blue light. In any case, it is difficult to obtain the effect of increasing the general amount of vitamin.

Also, the lighting is controlled by control board 37 so that green LED and blue LED are intermittently lighted at a frequency ranging from 20 to 50Hz at the same time. Specifically, the light is turned on and off at about 40Hz in a range of 35 to 45Hz, that is, it is lighted intermittently.

When the intermittent lighting or flashing can be clearly visually recognized by the user as the light slowly turns on and off at a frequency lower than 20Hz, it is an effective means to call the user's attention, strikingly blinking and flashing to the user. However, blinking light is generally felt by the user as a sign of warning noticing some trouble or when the user keeps watching the blinking light, it mentally gives an oppressive sensation to the user or it gives visual stimulation to the user, causing irritation or displeasure to the user.

On the other hand, as to vegetables, intermittent illumination gives more stimulation to the vegetables as compared with continuous illumination. Therefore, in addition to vitamin C produced through photosynthesis, the production of vitamin C can be promoted by the defense reaction of vegetables. This will be described on the basis of the actual experimental results.

Thus, when the light is intermittently illuminated at 20 to 50Hz, it turns on and off at a high speed, and therefore, it is possible to prevent the user from feeling it as a sign of warning noticing some trouble as in the case of less than 20Hz or from being mentally given an oppressive sensation in continuous watching of the blinking light, and to suppress visual stimulation given to the user, causing irritation or displeasure to the user. Particularly, at a speed of over 40Hz, the user's human eyes are unable to clearly see the intermittent illumination of the light from light source 13, and it looks like continuous illumination.

Accordingly, in the present example, setting the intermittent illumination frequency to 20 to 50Hz in the range in which the intermittent illumination cannot be clearly recognized, the intermittent illumination is executed in a range of less than 50Hz, more preferably less than 40Hz, that is effective and capable of giving stronger stimulation to fruits or vegetables. As a result, it is possible to realize such illumination that the user may feel coolness and freshness without being given mental stresses, and to obtain an effective result of increasing nutrient, stimulating the ecological defense reaction by giving sufficient stimulation to the fruits or vegetables.

For example, the light from light source 13 is turned on and off at 40Hz that is nearly the central wavelength of 20Hz to 50Hz, and it is visually recognized by human being. In this case, the flickering light can be recognized but it is not such clear blinking as in a frequency of less than 20Hz for example. Therefore, the user will hardly take the blinking of light as a kind of warning or receive a mentally oppressive sensation, and there will be no fear of giving mental stresses to the user. On the other hand, it is possible to give sufficient stimulation to the fruits or vegetables.

Such a frequency ranging from 20Hz to 50Hz, in other words, a frequency of less than 50Hz that is a power source frequency in countries such as Japan, China, and Europe, is employed for blinking illumination.

Accordingly, using a frequency of below the power source frequency, using a lighting device or LED used at the power source frequency widely prevailing, and executing the blinking illumination at a lower frequency than these, it is possible to enhance the reliability of light source 13.

The advantages of intermittent illumination for fruits or vegetables as described above will be explained in the following. Fig. 2A is an explanatory diagram for describing the change in the amount of vitamin C of paprika stored in temperature changeable room 6 of the refrigerator in the present example.

In the experiment, the setting of temperature changeable room 6 is such that vegetable room setting is about 5 °C and LED illumination is about 20Lx. The illumination timings are 20Hz, 30Hz, 40Hz, under the conditions of continuous lighting and non-illumination (dark). Then the change in amount of vitamin C from the before-storage amount of paprika stored for 5 days has been obtained.

As a result, as shown in Fig. 2A, the content of vitamin C in the dark is 98%, and the retaining percentage is a little lower than the initial one. However, in the case of storage under the illumination, in both of intermittent illumination and continuous illumination, the amount of vitamin C increased to 121%, 111%, 116%, 104%. Also, there is such a tendency that the retaining percentage of vitamin C is higher in storage under intermittent illumination as compared with continuous illumination.

This is because the nutrient of fruit and vegetable can be properly increased by using vitamin C that is an antioxidative substance produced through photosynthesis and ecological defense reaction of fruit and vegetables. The present experiment is intended to actually prove that the nutrient can be increased by properly exciting such ecological defense reaction in the refrigerator actually used.

Also, it is commonly known that red light and blue light are effective for photosynthesis. On the other hand, light in these wavelength regions gives rise to quality deterioration such as yellowing or optical refraction of the light. Therefore, when the lights of these colors are applied at a level of illumination that gives bad influence, the amount of vitamin C will remain a little increased. However, in this example, blue light is used as a wavelength for penetration of light into surfaces of fruit and vegetable.

The effect of blue light having bacteriostatic action that suppresses the increase of germs in microorganisms has been actually proved. Accordingly, using blue light as a wavelength for penetration of light into surfaces of fruit and vegetable is very effective to obtain a bacteriostatic effect that suppresses the increase of germs in vegetable surfaces in addition to ecological defense reaction.

Further, since blue light has a color that gives a feeling of refreshment to human being, the user is able to sensually feel that the vegetables are stored at a high level of cleanness and freshness.

On the other hand, green light is a light that gives no influence to the growth of vegetable. Therefore, even when the light is applied in strong illumination enough to increase the amount of vitamin, there will be no quality deterioration of fruits or vegetables such as transpiration of water in the vegetables due to active photosynthesis. That is, the quality is same as in the case of storing in the dark. Also, light of other wavelength regions reflects from vegetable surfaces, while green light penetrates into the vegetables. Consequently, when green light is applied to thick fruits or vegetables such as paprika, the production of vitamin C will be promoted due to internal photosynthesis.

Thus, in the present example, the production of vitamin C near vegetable surfaces is promoted due to the wavelength of blue light that is easily absorbed in the vegetable surfaces. Further, the freshness can be enhanced by obtaining a bacteriostatic effect of vegetable surfaces due to the wavelength of blue light. In addition, the wavelength of green light that facilitates the penetration of light into fruits or vegetables causes the light to be penetrated into the vegetables, and thereby, it is possible to promote the production of vitamin C by enhancing the ecological defense reaction in the vegetables.

Further, intermittent illumination of light source 13 increases stresses given to vegetables. As a result, it enhances the excitation of ecological defense reaction, causing the production of vitamin C as an antioxidant substance to be further promoted.

Also, similar effects as to those of vitamin C can be expected from vitamin A, polyphenol, carotin, and ubiquinone which are antioxidant substances produced by ecological defense reaction.

Further, simultaneous intermittent illumination of blue LED and green LED as light source 13 as an illuminating device makes clear the bright and dark of the light applied to the vegetables. As a result, it is possible to more reliably enhance the excitation of ecological defense reaction.

Also, when blue LED and green LED are illuminated, because of the color tone based on green, it enables the user to have an image of vegetable with the effect of illumination of the interior light, giving a clean image to to the user. That is, blue and green colors are able to improve the storageability by actual illumination as described above and to visually show the improvement of storageability to the user, and it is also possible to improve the using convenience.

Thus, in the present example, two different wavelengths, blue color and green color, are simultaneously illuminated. This is the illumination of color wavelength used in common, using at least one of the three primary colors, red purple, blue, and yellow. That is, in the case of blue LED, blue color is used out of the three primary colors, and in the case of green LED, green color made by mixing blue and yellow out of the three primary colors is used. Therefore, it means that same blue color is used in common. Accordingly, illuminating two different wavelengths at the same time, and even in case that it looks like a mixed color, illuminating colors being as similar as possible, it is possible to create a unified atmosphere and to give a comfortable impression to the user.

In other words, when two different wavelengths are simultaneously illuminated, it is preferable not to use all of the three primary colors, red, blue, and yellow, but to use a color tone that can be produced on the basis of two colors out of the three colors.

In making such a combination, it is desirable to use one color of green color frequency ensuring excellent penetration of the light. As another color combination, in an attempt to give stimulation outside the vegetables, combining red and orange or colorless ultraviolet light in addition to blue color will bring about similar effects. However, when blue and green are combined to giveg a feeling of refreshment to the user as described above, it is sensually difficult to give a feeling of refreshment to the user by combining red or orange color with green color. Accordingly, in the present example, green color and blue color are combined with each other as a color combination.

As described above, in the present example, the light displays a functional effect of increasing the nutrients of fruits or vegetables. At the same time, the color tone image may give the user a good impression of freshness and effective cooling action, and the degree of satisfaction of the user can be enhanced with respect to the refrigerator.

There is no particular limitations on the wavelength of light. For example, when light source 13 emitting light containing ultraviolet light is used, the ultraviolet light acts on the genes of microorganisms suspending in the storage room (temperature changeable room 6 in this example) or sticking to the wall or food surfaces in order to inactivate the microorganism increasing function. As a result, the inside of the storage room (temperature changeable room 6 in this example) can be kept in a hygienic state, and it is possible to retard the generation of color change, bad smell, or sticky surfaces with respect to the foods. In this way, hygienic storage with excellent storabeability of foods can be maintained by installing light source 13 containing ultraviolet light.

Further, some of mushrooms and fishes contain much precursor of vitamin D, and when ultraviolet light is applied to them, the molecules thereof are excited and converted to vitamin D. Accordingly, installing light source 13 including ultraviolet light in the storage room (temperature changeable room 6 in this example), it is possible to store the foods in the storage room (temperature changeable room 6 in this example) while increasing the amount of vitamin D contained.

Also, as to the type of light source 13, a miniature bulb, light emitting diode, fluorescent lamp, or ultraviolet lamp can be mentioned, but there is no particular limitations, and any type of light source 13 can be employed. Above all, light emitting diode generates almost no heat from the lamp itself and is widely used because it is excellent in running cost and durability.

Further, light source 13 is formed of a plurality of light sources (for example, blue LED and green LED). However, the installation place of the light sources in same storage room is not limited to one place. It is allowable to install individual light sources in different places in the same storage room. In this case, the user is able to feel a plurality of different colors, effectively feeling the result obtained by application of light from the light source.

In the case of the refrigerator in the present example, it is possible to call the user's attention by illuminating a light having a color tone different from the ordinary one in case of temperature rise due to opening of temperature changeable room drawer type door 8. In this case, it is desirable to call the user's attention in such a manner that the intervals of intermittent illumination can be visually recognized by the user. Generally, when the door is kept opened for a long period of time, causing the inside temperature of the storage room to rise, it is liable to give bad influences to the foods in the storage room. Particularly, in case of minus temperature, the water in frozen foods will be vaporized as the atmospheric temperature becomes increased due to opening of the door for a long period of time, and it sometimes causes generation of frost on the foods when cooling of the foods is resumed. In that case, the appearance, taste or flavor will become worse in terms of food quality. The door is opened for a long period of time in such cases that the foods are carried in and out or the door is not closed by the user. Particularly, when the door is not closed by the user, it will often cause the door to be opened for a long period of time.

When the temperature in the storage room rises, the color tone of the light from light source 13 is changed to a specific one or the user's attention is called by making the interval of intermittent illumination visible. In this way, the user will be able to recognize the door left opened for a long period of time, and it is possible to maintain the quality of foods, ice or the like in the storage room. Also, since it becomes possible to prevent the increase of power consumed for recovering the temperature after leaving the door opened for a long period of time, the reduction of energy consumption can be realized as a result.

There is no particular limitation on the color of light source 13 which is used to let the user recognize the temperature rise in the storage room. However, it is preferable to use red-based colors from the viewpoint of color engineering because such colors may give the user an impression of caution, warning or danger, and also, they are easily visually recognized by the user.

Further, when the color of light source 13 is yellow-based, it will be easily recognized because the color is conspicuous. At the same time, since both of normal and handicapped persons are able to recognize yellow as same color, the color can be used by both of them for same purpose, and it is possible to provide a refrigerator improved in using convenience.

Also, input to such light source 13 is made on the basis of reaction of detector 17. A temperature sensor is used as detector 17, and input is made after detection of a specific temperature. However, using the detector 17 as a door switch for example, it is also allowable to input after lapse of a specific time after detection of door opening, and there is no particular limitation.

Fig. 2B is a flow chart showing the control of light source 13 of the refrigerator in the present example. In this example, as shown in Fig. 2B, it is first checked whether the temperature of vegetable room is at weak setting (2 to 4 °C) (S301). As a result, when the setting is at weak setting (S301-Y), blinking illumination of the light source is executed at a frequency of 40Hz (S302). When the temperature is not at weak setting, for example, it is at strong setting (0 °C to 2 °C) that is lower temperature setting (S301-N), illumination of the light source is not performed (S303).

After that, when the temperature setting of vegetable room is changed (S304), it is checked to find the temperature zone in which the setting is made (S305). As a result, when it is at weak setting (S305-Y) the same as mentioned above, blinking illumination of the light source is continued at a frequency of 40Hz (S306). When the temperature is not at weak setting, for example, it is at strong setting that is lower temperature setting (305-N), the control is executed so that illumination of the light source is not performed (5303).

In the case of high-temperature weak setting (2 to 4 °C) out of the temperature settings in vegetable room 4, it is best for ordinary storage of vegetables and liable to excite ecological defense reaction. Accordingly, in the present example, only in the case of temperature setting that is liable to excite such ecological defense reaction, the control is executed the same as described above so that lighting illumination of light source 13 is performed. When the temperature in vegetable room is at strong setting that is a lower temperature ranging from 0 °C to 2 °C, it is relatively low temperature, and ecological defense reaction is hard to be excited because of dull movement of vegetable cells. Accordingly, the illumination of light source 13 is discontinued so that lighting illumination of light source 13 can be performed by focusing on a temperature zone capable of obtaining better effects. That is, it is possible to increase nutrient by focusing on more effective temperature zone by using the characteristic of ecological defense reaction.

In the refrigerator of the present example, temperature changeable room 6 is positioned below cold room 2, which is positioned above vegetable room 4 and freezer room 3. By making such a layout, a woman of average height is able to open and close the temperature changeable room drawer type door 8 without bending forward. Also, she can easily take in and out the foods without bending forward. Consequently, the using convenience will be improved. Also, as to vegetable room 4 which is used very frequently, a woman of average height is able to open and close the vegetable room drawer type door 10 without bending forward. In addition, she can take in and out even massive vegetables without bending forward. Consequently, the conventional using convenience will not be affected. Also, due to such a. layout that allows the user to easily use the refrigerator, a physical burden imposed on the user can be reduced.

In this example, as to the door of each storage room, taking into account the using convenience, rotary type is employed for cold room 2, and drawer type is for others, but there is no particular limitation on these.

In this example, blue LED and green LED are intermittently illuminated at the same time as light source 13 as a lighting device, but these lights having different color tones are allowable to be independent of each other in intermittent illumination. That is, light source 13 is allowable to be intermittently illuminated with turned-off intervals such that any one of the light with a wavelength for penetration of light into the surface of fruits or vegetables and the light with a wavelength for penetration of light into the interior of fruits or vegetables is not applied. In this case, because the bright and dark of the light is clear to the vegetables, with a turned-off interval of light source 13 provided, that is the timing of no simultaneous illumination of both lights at least, even in case of single color illumination after the turned-off interval, it is possible to precisely make clear the bright and dark of the light to vegetables by application of the light source. In other words, when there is provided a turned-off interval for maintaining a dark state without application of the light, it becomes possible to excite the ecological defense reaction with the light applied after the turned-off interval.

When such different color tone lights are individually intermittently illuminated, for example, it is allowable to illuminate the lights alternately through turned-off intervals of light source 13 that is the timing of no simultaneous illumination at same frequency, or to turn on and off at different frequencies depending on the color tones. Particularly, in the case of intermittent illumination at different frequencies depending on the color tones, it is possible to obtain more effective results by raising the frequency of the light that is desired to obtain more significant effects.

Thus, the purpose of intermittent illumination in this example is to excite the ecological defense reaction, and it is preferable to make clear the bright and dark at certain intervals or constant intervals. When there is provided a turned-off interval without light applied from light source 13 at least, it is possible to obtain ecological defense reaction due to intermittent illumination without being greatly influenced by the interval of illumination.

Also, as in the present example, energy consumption of light source 13 can be reduced by intermittent illumination instead of continuous illumination, and it is possible to realize an energy-saving refrigerator.

Further, it is preferable to use a configuration in which a plurality of color lights are alternately turned on without turned-off intervals or a configuration in which one color light is continuously turned on, while another color light is intermittently illuminated. In any case, same effects as in the present example can be obtained when the illumination control is capable of regenerating a state of some flashing through intermittent changes of general color tone and illuminance by using a plurality of light sources meeting the purpose of increasing the storageability and nutrient value.

As described above, in temperature changeable room 6 of the refrigerator in the present example, it is possible to penetrate blue light into the surfaces of fruits or vegetables and green light into the interior of fruits or vegetables. Accordingly, in addition to the conventional application of light to vegetable surfaces, light is penetrated into the vegetables, enabling increase of vitamin C of the whole vegetables, and thereby, it is possible to improve the storageability by illumination. At the same time, the using convenience can be improved by visually showing the user that the storageability has been improved, and it is possible to provide a high-quality refrigerator.

Also, in this example, described is the inside of temperature changeable room 6 having a changing function of wide temperature zones ranging from refrigeration to freezing temperatures, but the invention is not limited by this configuration. For example, it is naturally possible to install the mechanism in vegetable room 4 in order to increase nutrient while enhancing the freshness of fruits or vegetables.

Further, in the present example, the structure of light source 13 is not described in detail, but it is desirable to provide a cover formed from light penetrable member that allows penetration of light from the light source. In this way, dew gathering in the refrigerator closed at low temperatures can be prevented from direct sticking to light source 13, and it is possible to prevent light source 13 from becoming deteriorated or out of order.

Also, in this example, light source 13 is disposed on the top surface of the storage room. However, in case of a container formed from light penetrable member that allows penetration of light from the light source, it is possible to execute the illumination via the container formed from light penetrable member, for example disposing light source 13 on the rear surface, bottom or side surface. In that case, because light source 13 is positioned outside the container as a storage space in the storage room, it will not be exposed to the atmosphere of high humidity due to vegetables or the like stored in the storage space, and thereby, it is possible to prevent dew from sticking to the areas near the light source. In addition, the user is prevented from touching the light source 13, and it is possible to prevent the device from becoming out of order, thereby enhancing the safety.

Further, light source 13 can be configured in that the light is diffused and reflected by using a member such as a reflector plate for example so that the direction and range of illumination can be selected and adjusted. In such a configuration, the design freedom for optimizing the effect is increased, and it is possible to select the position of light source 13 installed, the light emitting position of LED, and the direction of illumination. Providing light source 13 with a light penetrable cover, it is also effective to control the direction and diffusion of light with the cover itself.

In the present example, lighting illumination of light source 13 is performed only in case of temperature setting for easier excitation of ecological defense reaction. However, for example, it is possible to dispose a nutrient-up button on the door surface or operation panel 14 for performing lighting illumination of light source 13 in optional timing of the user irrespective of the temperature setting of vegetable room 4. In this case, for example, disposing a nutrient-up button on the door surface, the user is able to recognize the nutrient-up function. At the same time, it is possible to increase the nutrient by lighting illumination of light source 13 in optional timing according to the user's need. Accordingly, it is possible to more improve the using convenience for the user.

Also, in the present example, it is possible to combine the configuration for performing lighting illumination of light source 13 only in case of temperature setting for easier excitation of ecological defense reaction with a configuration for performing lighting illumination of light source 13 in optional timing of the user. In that case, it becomes possible to increase nutrient by lighting illumination of light source 13 in optional timing of the user in addition to the illumination of light source 13 that is usually performed by focusing on temperature setting for easier excitation of ecological defense reaction. Accordingly, it is possible to provide a high performance refrigerator further improved in using convenience for the user.

### Example 2

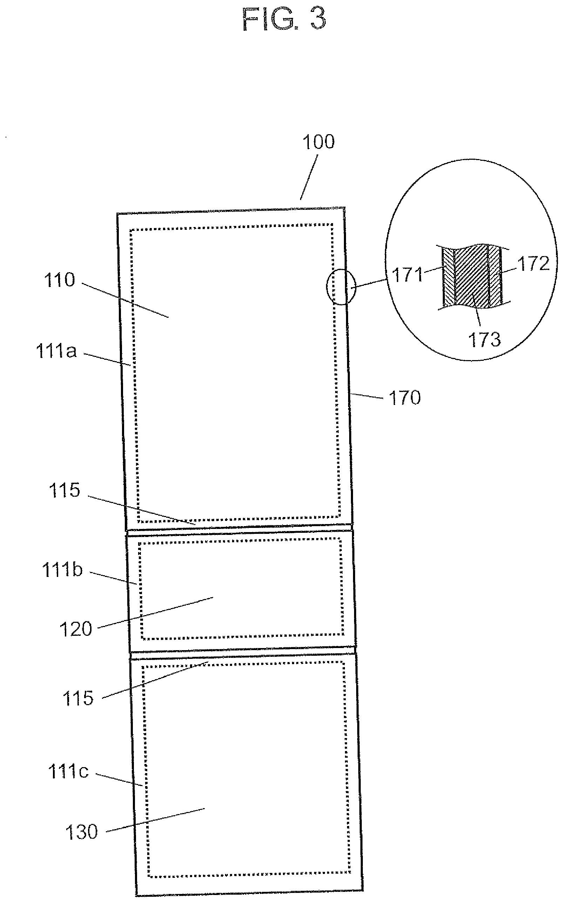

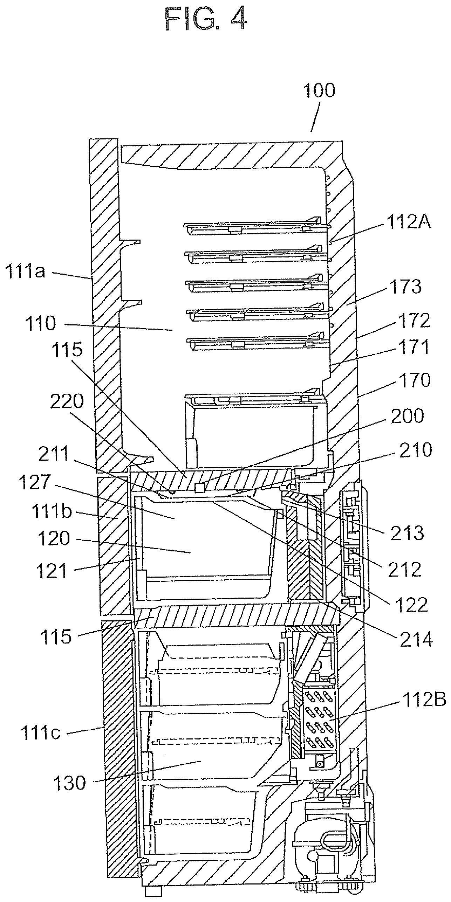

Fig. 3 is a front view showing a refrigerator in the example 2. Fig. 4 is a vertically sectional view of the refrigerator of the example.

In this example, for the same portions as in the example 1 with respect to configuration and technical concept, the detailed description will be omitted. As for configurations of which the same technical concept as the content mentioned in the example described above can be applied to this example, it is possible to realize a configuration combined with the technical concept and configuration mentioned in the example described above.

As shown in the figure, refrigerator 100 is provided with three doors 111a, 111b, 111c at the front thereof. In storage box 170, there is provided a storage room formed of three sections.

Refrigerator 100 comprises a storage room divided into cold room 110, vegetable room 120, and freezer room 130 from top to bottom. In Fig. 3, the opening of each storage room is represented by rectangular broken lines, and foods to be stored are carried in and out from the front side of storage box 170 divided in a shelf-like fashion.

Also, each of doors 111a, 111b, 111c is installed on storage box 170 in such manner that the storage can be closed and the doors can be opened and closed. Specifically, refrigerator 100 comprises door 111a capable of opening and closing cold room 110, door 111b capable of closing and opening vegetable room 120, and door 111c capable of closing and opening freezer room 130. Doors 111a, 111b, 111c are fitted to storage room 170 by means of hinges that allow opening and closing of the doors.

Heat insulating wall 115 is disposed for partitioning purpose between cold room 110 and vegetable room 120, and between vegetable 120 and freezer room 130. Storage box 170 has a function of heat insulation between outside and inside. As shown in the oval of Fig. 3, storage box 170 is formed of inner box 171 vacuum-molded by using resin such as ABS, outer box 172 formed by using a metal material such as precoat steel sheet, and heat insulator 173 disposed between inner box 171 and outer box 172. Also, door 111 is similarly formed of an inner plate, outer plate, and heat insulator (not shown).

As shown in Fig. 4, refrigerator 100 comprises light source 200, partition 210 formed from a light penetrable material that is the cover member of light source 200, and antibacterial device 220. Also, refrigerator 100 includes food container 121 and lid 122 in vegetable room 120.

Antibacterial device 220 is an ozone generator which generates ozone from the air in vegetable room 120. Antibacterial device 220 suppresses the increase of bacteria sticking the surfaces of fruits or vegetables in particular, and thereby, it is possible to more improve the freshness of fruits or vegetables stored in the vegetable room.

Light source 200 is installed so that the inside of food container 121 can be illuminated. When the door is opened by the user to take in or out the foods, the light applied from light source 200 leaks out of the room. Therefore, the user of the refrigerator is able to recognize the color tone of the light. Also, in the present example, light source 200 is provided with a plurality of light emitting sources. The plurality of light emitting sources individually emit light of different color tones. The operation for turning on and off the light emitting sources is performed through a control board. Light source 200 executes intermittent illumination. As for the method of illumination and color tone of light source 200, the technology is same as the content described in the example 1. That is, the light is controlled by the control board so that green LED and blue LED are intermittently illuminated at a frequency ranging from 20 to 50Hz.

Also, antibacterial device 220 is operated every specific time, and the operation of antibacterial device 220 is stopped when the door is opened.

Further, antibacterial device 220 is provided with an antibacterial button on the door surface as needed so that the user is able to operate the device in optional timing. Accordingly, it is possible to make an appeal to the user for the advantage of the refrigerator having an antibacterial device, Moreover, since the antibacterial function can be used only in need, it is possible to provide a refrigerator with better using convenience.

Thus, in the present example, light source 200 is installed in an attempt to increase nutrient of fruits or vegetables stored in vegetable room 120, and antibacterial device 220 is installed in an attempt to enhance the freshness of fruits or vegetables stored in vegetable room 120.

Also, light source 200 is buried in the bottom of heat insulating wall 115 as a partition between cold room 110 and vegetable room 120, which is positioned at the inner side of vegetable room 120. Since the light source is buried heat insulating wall 115, it is possible to prevent the foods from coming in contact with light source 200 when taking out food container 121 and to realize smooth opening and closing operation.

Further, light source 200 is disposed in the vicinity of cold air discharge port 213. In the vicinity of cold air discharge port 213, cold air comes in from outside the storage room causing the temperature to be lowered. Accordingly, even in case dew water sticks to light source 200, such dew drop can be efficiently eliminated because light source 200 is positioned in the passage of air from cold air discharge port 213. Also, even in case the temperature is somewhat increased with light source 200 turned on, it is possible to suppress the temperature increase around the light source 200 with the cold air from cold air discharge port 213. Accordingly, it is possible to suppress the influence of temperature rise to vegetables or the like and to enhance the preservation of freshness.

Also, same as in the example 1, blue LED and green LED are illuminated by light source 200. In this way, due to the blue light applied from blue LED, the light penetrates into the surfaces of fruits or vegetables, and further the illumination of blue light makes a bacteriostatic action to suppress the increase of bacteria in microorganism. Therefore, in addition to the increase of nutrient due to ecological defense reaction of vegetable surfaces, it is possible to obtain a bacteriostatic effect to suppress the increase of bacteria in vegetable surfaces.

Further, since blue light has a color that visually gives a feeling of refreshment to human being, the user is able to sensually feel that the vegetables are stored at a high level of cleanness and freshness.

Also, green light applied from green LED is a light that gives no influence to the growth of vegetables. Therefore, even when the light is applied in strong illumination enough to increase vitamin, there will be no quality deterioration of fruits or vegetables such as transpiration of water in the vegetables due to active photosynthesis. Accordingly, even when the light is applied at a high level of illumination, the quality is same as in the case of storing in the dark. Also, light of other wavelength regions reflects from vegetable surfaces, while green light penetrates into the vegetables. Consequently, when green light is applied to thick fruits or vegetables such as paprika, the production of vitamin C will be promoted due to internal photosynthesis.

Thus, in the present examples, the production of vitamin C near vegetable surfaces is promoted due to the wavelength of blue light that is easily absorbed in the vegetable surfaces. Further, the freshness can be enhanced by obtaining a bacteriostatic effect of vegetable surfaces. In addition, the wavelength of green light that facilitates the penetration of light into fruits or vegetables causes the light to be penetrated into the vegetables, and thereby, it is possible to promote the production of vitamin C by enhancing the ecological defense reaction in the vegetables.

Further, with blue LED and green LED simultaneously illuminated from light source 200, it becomes bright green-based as a color tone. The bright green-based color tone enables the user to have an image of vegetable illuminated by the interior light, and it may give a clean image to the user. Accordingly, the storageability can be improved by illumination of the light, and it is possible to visually show the improvement of storageability to the user and also to improve the using convenience.

In the present example, since LED as a light emitting diode is used as light source 200, it may save more energy as compared with an ordinary lamp, further suppressing the temperature rise.

Also, intermittent illumination of light source 200 results in shortening of the lighting time, and therefore, it becomes possible to install light source 200 that is more energy-saving and less in temperature rise.

In the present example, LED as a light emitting diode is used as light source 200, but it is not limited by this configuration. It is allowable to use a light source combining light sources capable of emitting lights of different wavelengths. However, in the case of a light source being greater in heat generation, as in the present example, it is desirable to employ a configuration that decreases the temperature influence to the storage room, for example, disposing light source 200 in the vicinity of cold air discharge port 213 where the temperature is lowered as cold air flows therein from outside the storage room.

Further, refrigerator 100 is equipped with a evaporator as a cooling device. In the case of this example, the cooling device is formed of a cooling cycle having two evaporators. Specifically, first evaporator 112A is installed at the rear side of the back of cold room 110. The back of cold room 110 is cooled by heat transfer from first evaporator 112A. The air in cold room 110 is cooled by the back portion thus cooled.

Also, second evaporator 112B is installed at the rear side of the back of freezer room 130. The inside of freezer room 130 is cooled by the cold air forcibly passed through second evaporator 112B, and the cold air used to cool the foods is again returned to second evaporator 1128.

The cold air discharged from second evaporator 112B is also supplied to vegetable room 120 via cold air discharge port 213 disposed above the back of vegetable room 120. The volume of cold air supplied to vegetable room 120 is controlled by opening and closing control a damper (not shown), and the temperature is maintained at the temperature zone between the temperature of cold room 110 and the temperature zone of freezer room 130. Specifically, the temperature is controlled so that it is maintained at a temperature in a range of 4 °C > 0 °C.

Also, the cold air also supplied to vegetable room 120 through cold air discharge port 213 returns to second evaporator 112B via cold air suction port 214 disposed at the bottom of the rear of vegetable room 120.

In this way, the cold air flowing into vegetable room 120 is not the cold air passing through other storage rooms but the cold air directly flowing therein from first evaporator 112A and, for example, it is independent of the cold air passage of the storage room in which the temperature is relatively high as in the cold room and bacteria are liable to increase, and therefore, the cold air flowing into the vegetable room is cleaner and highly antibacterial.

Further, as described above, the cold air in vegetable room 120 is discharged from cold air suction port 214 disposed at the bottom thereof, and because the cold air is heavier than air, it is possible to quickly discharge ozone that is liable to gather at the lower side. Accordingly, the increase of ozone concentration in vegetable room 120 can be suppressed.

Also, the cold air is heavier than air, and the cold air containing ozone that is liable to gather at the lower side is discharged from cold air suction port 214. Consequently, ozone having excellent antibacterial effect is also circulated to the cold air in freezer room 130 with evaporator 112 disposed at the rear thereof, and thereby, it is possible to enhance the antibacterial level in the freezer room.

Thus, the cold air supplied to vegetable room 120 via cold air discharge port 213 returns to second evaporator 112 via cold air suction port 214. In the air passage in vegetable room 120, antibacterial device 220 is positioned at the upstream side. In other words, antibacterial device 220 is disposed in a position closer to cold air discharge port 213 than to cold air suction port 214.

That is, antibacterial device 220 is disposed at the upper steam side in the air passage in vegetable room 120. In this way, it is possible to diffuse ozone sprayed from the ozone generator, antibacterial device 220, uniforming in vegetable room 120, along with the cold air flowing into vegetable room 120. Accordingly, the freshness of fruits or vegetables stored can be more enhanced.

Also, ozone sprayed from the ozone generator, antibacterial device 220, is sprayed into the vegetable room through mist outlets 211, 212. Therefore, installing a plurality of mist outlet 211, 212, it is possible to further enhance the diffusion of ozone. Also, mist outlet 211, 212 are, as shown in Fig. 4, disposed at least apart from each other at the front side and the rear side that correspond to either side with respect to the center in the back and forth direction of vegetable room 120. In this way, the diffusion of ozone having an antibacterial function is further enhanced. Such a configuration having a plurality of mist outlet 211, 212 may function as an antibacterial material diffusive mechanism.

Further, as an antibacterial material diffusing mechanism, the antibacterial material mist outlet 211, 212 are arranged apart from each other at the right side and the left side with respect to the center line in the right and left direction of vegetable room 120, and it is possible to further enhance the diffusion of ozone that is an antibacterial material.

Also, mist outlet 211, 212 are arranged at the top side, opening toward the lower side, and cold air discharge port 213 is arranged at the top side of vegetable room 120, opening toward the horizontal side. In this way, it is possible to diffuse ozone, that is heavier than air and tends to go downward, in the horizontal direction along with the cold air sprayed nearly horizontally from cold air discharge port 213. After that, ozone is diffused downward due to its own weight. Accordingly, ozone can be uniformly distributed by preventing deviation of ozone concentration. As a result, it is possible to more enhance the antibacterial level in vegetable room 120.

Therefore, the spray direction of mist outlet 211, 212, in which ozone that is antibacterial material is sprayed from antibacterial device 220, is not identical to the spray direction in which the cold air is discharged from cold air discharge port 213 that is a cold air opening for discharging cold air into the storage room, but crossing the direction. This is another function of the antibacterial material diffusive mechanism, which may enhance the diffusion of antibacterial material. Also, the spray direction of mist outlet 211, 212 is desirable to cross the spray direction of cold air discharge port 213, opening for discharging cold air into the storage room, at an predetermined angle up to about ±30 °C including right angle 90 °C. In other words, cold air discharge port 213 is arranged so that the cold air sprayed from cold air discharge port 213 directly goes to mist outlet 211, 212, and thereby, it may effectively function as a diffusive mechanism.

Food container 121 is a case which is disposed in vegetable room 120 that is a storage room, and can be drawn out, having upward opening 127. Lid 122 is a plate-like member to close opening 127 of food container 121 and is provided with a passage hole (not shown). Also, lid 122 is formed from a material that allows sufficient penetration of light of necessary wavelength out of the light emitted from light source 200. Lid 122 has a function of adjusting the humidity in food container 121. Specifically, the humidity transpirated from vegetables stored in food container 121 is maintained in food container 121 at a certain level, while adjusting the humidity to such a level that dew will not gather in food container 121.

As described above, refrigerator 100 in the present example is capable of enhancing the freshness of foods stored by using the force of light emitted from light source 200. Accordingly, it becomes possible to store foods for a long period of time in a safer method causing no harm to human body.

Further, when light source 200 is intermittently illuminated, the intermittent illumination from light source 200 is invisible to the human eye or the user, and the intermittent illumination is performed in such manner that it looks like continuous illumination. Consequently, there will be no such problem that the user takes the blinking of light as a kind of warning; receiving mental stresses as a result of watching the continuously blinking light, or feels uneasy due to visual stimulation that invites anger, and it is possible to realize a safe illumination method that causes no mental damage to human body. Thus, it is possible to increase the stresses given to fruits or vegetables by intermittent illumination, to enhance the excitation of ecological defense reaction, and to promote the production of vitamin C that an antioxidant substance.

As described above, in this example, light source 200 is installed for the purpose of increasing nutrient of fruits or vegetables stored in vegetable room 120, and antibacterial device 220 is installed for the purpose of enhancing the freshness of fruits or vegetables stored in vegetable room 120. Accordingly, it is possible to increase nutrient of fruits or vegetables stored in vegetable room 120, and in addition, to enhance the freshness thereof, and to greatly enhance the function of vegetable room 120.

In the present example, food container 121 is installed in vegetable room 120, but the present invention is not limited by this configuration. It is allowable to be configured in that foods are directly stored in vegetable room 120 without food container 121 and the lid thereof.

Also, storage box 170 is partitioned by heat insulating wall 115 in a stationary fashion, but when it is not necessary to use heat insulating walls in particular, it is allowable to use partition walls not limited to heat insulating materials.

### Embodiment

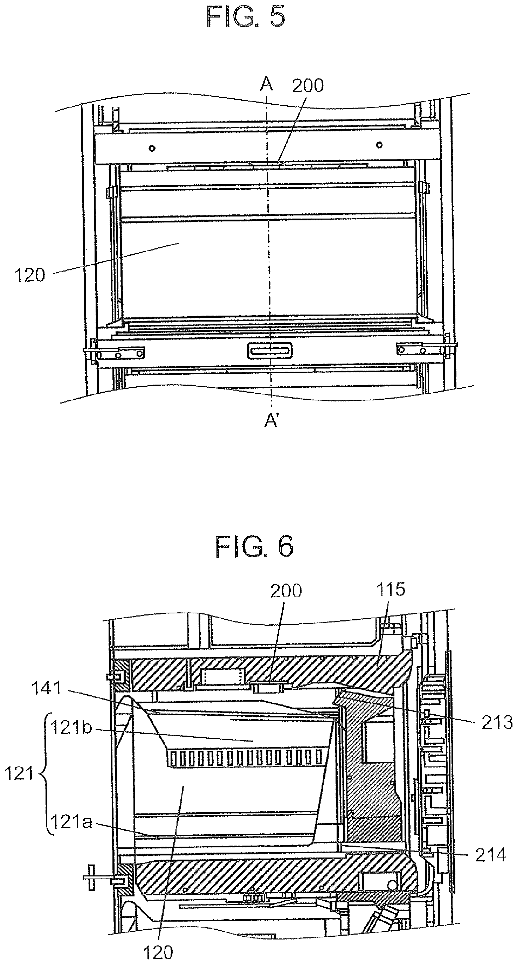

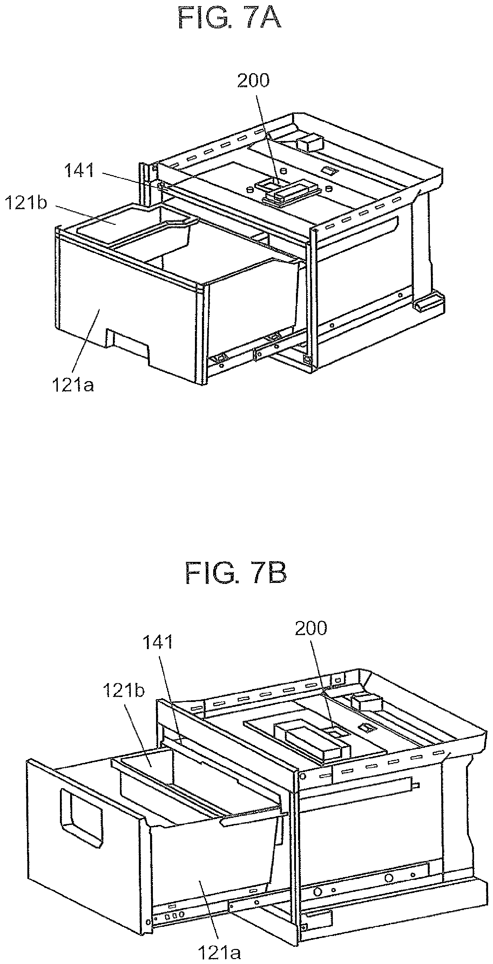

Fig. 5 is a front view of a vegetable room of a refrigerator in the embodiment of the present invention. Fig. 6 is a vertical sectional view of the vegetable room of the refrigerator in the embodiment. Fig. 7A is a perspective view of the vegetable room of the refrigerator in the embodiment. Fig. 7B is a perspective view showing an example of another vegetable room of the refrigerator in the embodiment.

In this embodiment, another embodiment is disclosed with respect to the structure in vegetable room 120 of refrigerator 100 shown in the example 2. For the same portions as described in the example 1 and the example 2 with respect to configuration and technical concept, the detailed description is omitted. For such a configuration that the same technical concept as mentioned in the above example can be applied to this embodiment, it is possible to realize a configuration combined with the technical content and configuration mentioned in the above embodiment.

In the figure, light source 200 is buried in the inner side of vegetable room 120 at the bottom of heat insulating wall 115 that is a partition between the cold room and vegetable room 120. Also, light source 200 is arranged on center line AA' in the lateral (right and left) direction of vegetable room 120. Further, light source 200 is arranged at a position closer to the rear side than to the center in the forward and backward direction of vegetable room 120.

Also, vegetable room 120 is internally provided with food container 121, that is, lower container 121a and upper container 121b arranged at the upper part of lower container 121a. Upper container 121b is, as shown in Fig. 7A, disposed at the left side as viewed from front of vegetable room 120. When lower container 121a and upper container 121b are in a state of being housed in vegetable room 120, as shown in Fig. 6, lid 141 is closed, preventing transpiration of the water from the container. When lower container 121a and upper container 121b are in a state of being drawn out, as shown in Fig. 7A, lid 141 is not positioned over lower container 121a and upper container 121b, but it stays at the main body side of refrigerator 100. That is, lid 141 is fixed in vegetable room 120, and with lower container 121a housed therein, lid 141 serves to close lower container 121a. Accordingly, there is no fear of hindrance caused by lid 141 when taking the foods in and out.

Also, as shown in Fig. 7A, light source 200 is not arranged just above upper container 121b, but it is arranged just above the opening of lower container 121a so that the light directly reaches lower container 121a. That is, the light from light source 200 is directly applied to the fruits or vegetables stored in lower container 121a without any obstruction. The light is indirectly applied to the fruits or vegetables stored in upper container 121b via upper container 121b formed from a light penetrable material. Also, light source 200 is lighted by simultaneous intermittent illumination of green LED and blue LED.

The operation of the refrigerator having such a configuration will be described in the following. In addition to the effects in the examples so far described, in this embodiment, the space illuminated by light source 200 is separated into lower container 121a and upper container 121b.

Due to the illumination of light source 200, vitamin C that is an antioxidative material is produced in the fruits or vegetables stored in lower container 121a through photosynthesis and ecological defense reaction, and it is possible to properly increase the nutrient of fruits or vegetables.

Also, upper container 121b with the door closed is closed by lid 141 disposed at the upper side thereof, and the space can be maintained at a higher level of humidity as compared with lower container 121a. Accordingly, a method of storing fruits, leaf vegetables or the like whose freshness is enhanced at a higher level of humidity is employed for upper container 121b, separating the storing space of vegetable room 120, and it is possible to realize a refrigerator with excellent using convenience.

Further, upper container 121b is formed from a light penetrable material, and thereby, nutrient enhancement and bacteriostatic action can be obtained by the illumination of light source 200. Also, cold air flows indirectly into upper container 121b through lower container 121a. This prevents the low-temperature cold air from directly flowing into upper container 121b from the evaporator, and it is desirable to store fruits or vegetables that prefer a higher level of humidity in the container. Also, when fruits or vegetables such as bananas and eggplants which are sensitive to low temperatures and deteriorate in freshness due to low temperatures are stored in the container, it is possible to prevent them from low temperature hindrance and to further enhance the freshness.

Accordingly, the cold air flowing in from cold air discharge port 213 directly flows into the storage space of lower container 121a, and also the light from light source 200 is directly applied thereto in the environment. On the other hand, highly humid cold air flows into the storage space of upper container 121b via lower container 121a, and also the light from light source 200 is indirectly applied thereto via upper container 121b in the environment. Therefore, the storage environments of these storage spaces are different from each other.

Thus, in the present embodiment, a combination of blue light and green light is applied to the fruits or vegetables. Accordingly, high-quality fruits or vegetables enhanced in nutrient value can be stored, and also, making it easily associated with the foods to be stored, the user is able to immediately recognize the temperature condition in the storage room.

Further, in this embodiment, the types of cold air flowing in are different from each other, and there are provided a plurality of containers different in intensity of light from the light source. In this way, it is possible to store foods in a space suited for the purpose by making proper use of vegetable room 120. Accordingly, it becomes possible to effectively increase the nutrients and enhance the freshness of fruits or vegetables in vegetable room 120.

Also, since light source 200 is buried in heat insulating wall 115, it prevents the food from touching the light source 200 when opening or closing the drawer type door, making it possible to realize smooth opening and closing operation.

In the present embodiment, as shown in Fig. 7A, upper container 121b is arranged in a position not opposing to light source 200, but as shown in Fig. 7B, it is also allowable to be configured in that the light from light source 200 is directly applied to the inside of upper container 121b.

In that case, upper container 121b is able to obtain nutrition improvement and bacteriostatic action more effectively through direct illumination of light source 200. In addition, cold air flows indirectly into upper container 121b through lower container 121a. As a result, it prevents the low-temperature cold air from flowing into upper container 121b from the evaporator, enabling the storage of fruits or vegetables that prefer a high level of humidity. Also, when fruits or vegetables such as bananas and eggplants which are sensitive to low temperatures and deteriorate in freshness due to low temperatures are stored in the container, it is possible to prevent low temperature hindrance and to further enhance the freshness. Therefore, the enhancement of nutrients can be realized by focusing on fruits or vegetables in upper container 121b.

Also, in this case, when the foods are stored in lower container 121a and upper container 121b, lid 141 is closed, thereby preventing transpiration of water out of the containers. When lower container 121a and upper container 121b are in a state of being drawn out, lid 141 is not positioned over lower container 121a and upper container 121b, but it stays at the main body side of refrigerator 100. Accordingly, there is no fear of hindrance caused by lid 141 when taking the foods in and out.

### Example 4

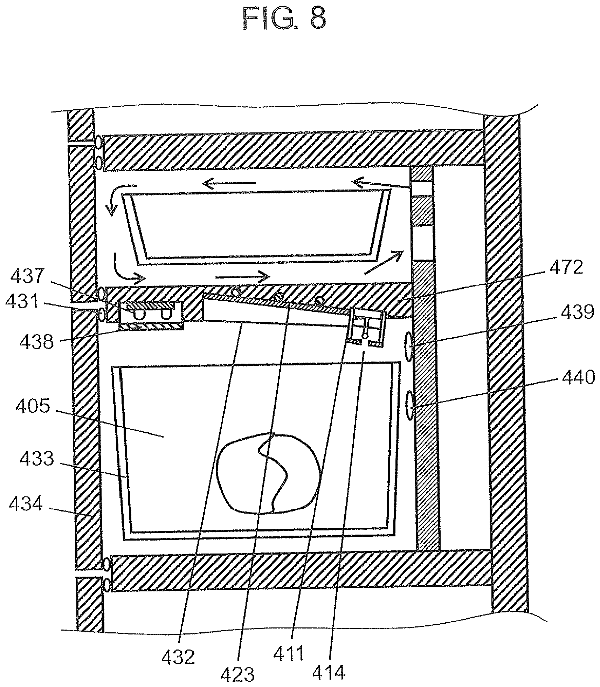

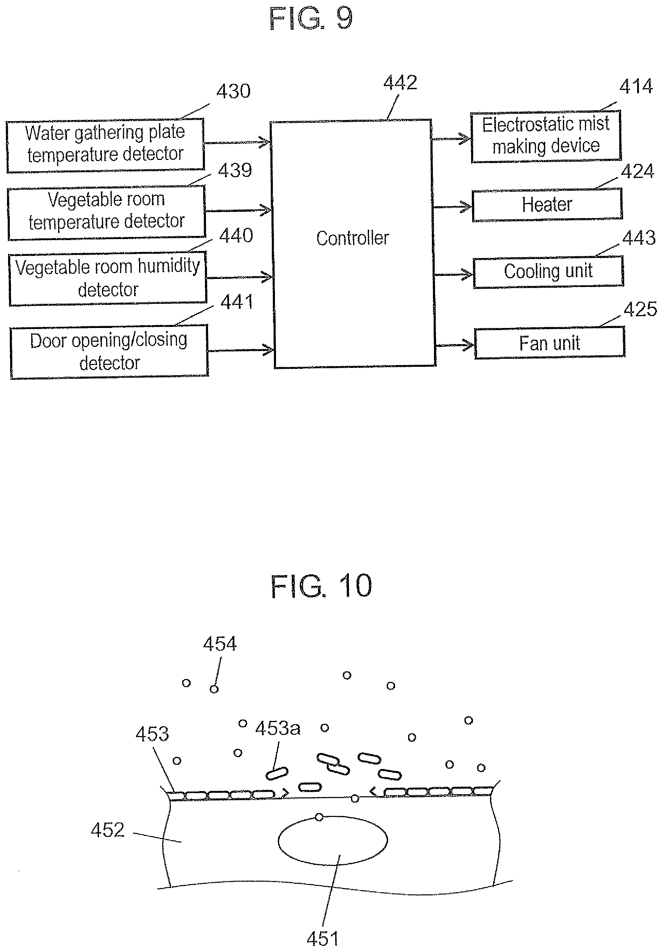

Fig. 8 is a vertical sectional view near a water gathering portion of a refrigerator in the example 4. Fig. 9 is a function block diagram of the refrigerator in the example. Fig. 10 illustrates an image of sterilization with mist generated by an electrostatic mist making device used in the refrigerator of the present example.

In the present example, for the same portions as in the examples 1 to 2 and the embodiment with respect to configuration and technical concept, the detailed description will be omitted. As for configurations of which the same technical concept as the content mentioned in the examples and embodiment described above can be applied to this example, it is possible to realize a configuration combined with the technical content and configuration mentioned in the preferred embodiments described above.

In Fig. 8, electrostatic mist making device 414 and water gathering plate 423 for supplying water to electrostatic mist making device 414 are disposed in partition 472 at the top of vegetable room 405. Further, light source 437 for applying blue light and green light to the inside of the refrigerator and diffusion plate 438 for diffusing the light from light source 437 into the whole of the inside of the refrigerator are disposed in partition 472. Vegetable room 405 is equipped with vegetable room temperature detector 439 and vegetable room humidity detector 440.

The antibacterial device is formed of electrostatic mist making device 414 that is a mist making device for generating mist by using water kept in vegetable room 405. Electrostatic mist making device 414 functions so that mist containing radicals in particular sticks to the fruits or vegetables. In this way, the increase of bacteria sticking to the surfaces of fruits or vegetables can be suppressed. As a result, the freshness of fruits or vegetables stored in the vegetable room can be enhanced.

Also, electrostatic mist making device 414 in the present example needs no water supply from outside because it may generate mist by using dew water deposited on members on which water in the storage room gathers in the form of dew.

Water gathering plate 423 which is a member on which water gathers in the form of dew is cooled so as to become lower than the dew point in temperature by means of the cooling mechanism of the refrigerator. In this way, a temperature difference is generated between water gathering plate 423 and refrigerator temperature, causing the water in the refrigerator to gather on water gathering plate 423 in the form of dew.

Also, in Fig. 9, controller 442 serves to control electrostatic mist making device 414, heater 424, cooling unit 443, and fan unit 425 in accordance with the detection results of water gathering plate temperature detector 430, vegetable room temperature detector 439, vegetable room humidity detector 440, and door opening/closing detector 441. Water gathering plate temperature detector 430 is arranged in the vicinity of water gathering plate 423 in partition 472. Also, door opening/closing detector 441. is arranged in the vicinity of hinge 431 in order to detect the opening and closing of door 434.

The operation of the refrigerator in the present example having the above configuration will be described in the following. The dew point temperature of vegetable room 405 can be predicted by vegetable room temperature detector 439 and vegetable room humidity detector 440. And, the adjustment is made so that the water gathering plate surface temperature is lower than the dew point temperature. For example, the water gathering plate surface temperature is adjusted as shown in Table 1.

**[Table 1]**

| | | Vegetable room humidity | | | |
|---|---|---|---|---|---|
| | | 99% | 95% | 90% | 80% |
| Vegetable room temperature | 10°C | 9.9°C | 9.2°C | 8.4°C | 6.7°C |
| | 6°C | 5.9°C | 5.3°C | 4.5°C | 2.8°C |
| | 5°C | 4.9°C | 4.3°C | 3.5°C | 1.8°C |
| | 4°C | 3.9°C | 3.3°C | 2.5°C | 0.9°C |
| | 2°C | 1.9°C | 1.3°C | 0.5°C | -1.0°C |

For example, when the vegetable room temperature of vegetable room 405 is 5 °C and the humidity thereof is 90%, the dew point temperature is 3.5 °C. When the temperature in vegetable room 405 becomes lower than the dew point temperature, vapors in the refrigerator are deposited on water gathering plate 423 in the form of dew. The dew water is delivered to the electrostatic mist making part of electrostatic mist making device 414 along cover 432 of the water gathering plate disposed at water gathering plate 423 or at the storage room side of water gather plate 423.

The water delivered from water gathering plate 423 and cover 432 is used to spray mist from electrostatic mist making device 414, which is sprayed into container 433 in which vegetables are stored. The sprayed mist maintaining ozone and OH radical sticks to the surfaces of fruits or vegetables plus-electrified. The mist is antibacterial, sterile, and bactericidal, and at the same time, it may oxidize and decompose harmful substances sticking to the vegetable surfaces. Also, the mist water gets into fine holes of vegetables or fruits, and is absorbed into the vegetables.

The mist generated by electrostatic mist making device 414 in the present example maintains ozone and radical, having strong oxidizing power. A part of bacterial cell membrane protein in the texture of bacteria is oxidized, decomposed, and subjected to bacteriolysis by such ozone and radical, and consequently, the bacteria are inactivated.

Fig. 10 illustrates an image of sterilization with mist generated by electrostatic mist making device 414. In Fig. 10, bacterium is formed in that cytoplasm 452 internally having nucleic acid 451 is covered with cell membrane 453. In this example, a part 453a of cell membrane 453 is broken by ozone or OH radical retained in mist 454 generated by electrostatic mist making device 414. As in the present example, only by breaking a part 453a of cell membrane 453, it is possible to inactivate and extinguish the bacterium even without breaking nucleic acid 451. Thus, in the present example, the level of ozone or OH radical is not so high as to inactivate and instantaneously extinguish bacterium, but ozone or OH radical can be used at a level such that inactivation and extinction of bacterium are effectively promoted by breaking the cell membrane of the bacterium. Using such a level of ozone or OH radical, it is possible to inactivate bacterium to such an extent that the freshness of vegetables is not affected. Thus, in this example, the mist generated is able to take antibacterial, sterile, and bactericidal actions on the inside of vegetable room and surfaces of vegetables, and at the same time, to oxidize and decompose harmful substances sticking to vegetable surfaces.

Accordingly, in the present example, the electrostatic
mist making device is a mist spray device for supplying fine particles of water and at the same time it serves as an antibacterial device which may suppress increase of bacteria and virus.

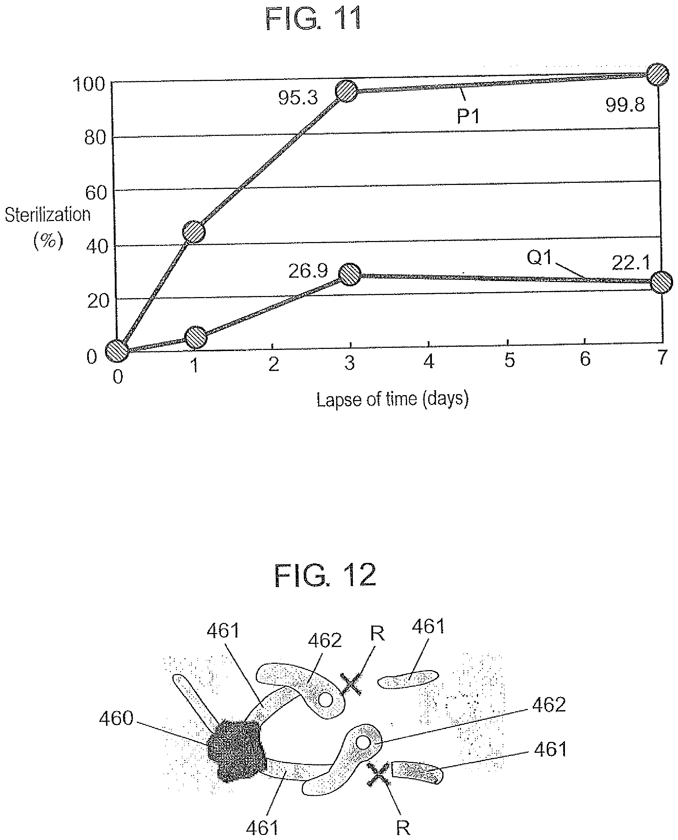

Fig. 11 shows the result of confirming the effect of sterilizing coliform bacteria that is a representative type of bacteria by using an experimental box nearly closed, supposing a vegetable room of a refrigerator.

The conditions set for the experiments are about 70L as the capacity of the experimental box, about 5 °C as the experimental box temperature, and 90%HR or over as the relative humidity in experimental box. Electrostatic mist making device 414 in this example is installed in the experimental box and then operated at the operation ratio of 30-minite ON and 30-minute OFF. For the purpose of comparison, a conventional vegetable room is supposed, and the test conducted is the same as the one performed by spraying mist by using a supersonic mist making device instead of electrostatic mist making device 414 under the same conditions as for the above experimental box.

In Fig. 11, solid line P1 shows the sterilization percentage attained by the experimental box in the present example. Also, solid line Q1 shows the sterilization percentage attained by the experimental box that is supposed to be a conventional vegetable room. As shown in Fig. 11, in the conventional supersonic mist making device, the sterilization percentage is less than 30%, while in the present example, it has been found to be 95% or over in 3 days and 99% or over in 7 days in the case of mist by using the electrostatic mist making device.

Fig. 12 illustrates an image of mold suppression by mist containing radical generated by electrostatic mist making device 414. Mold grows as spore 460 germinates and makes mycelium 461 longer. As shown in Fig. 12, due to ozone or OH radical 462 contained in the mist generated, elongated mycelium 461 is removed at R portion- As a result, the mold is unable to elongate the mycelium any more and is inactivated, and thereby, the growth of mold is suppressed. In this way, in the present example, the level of ozone or OH radical used is not so high as to extinguish the mold itself in a moment, but ozone or OH radical is used to such an extent that inactivation or extinction of bacteria is effectively promoted by breaking down mycelium 461 of mold. Accordingly, it is possible to suppress the growth of mold in a range such that the freshness of vegetables is not affected.

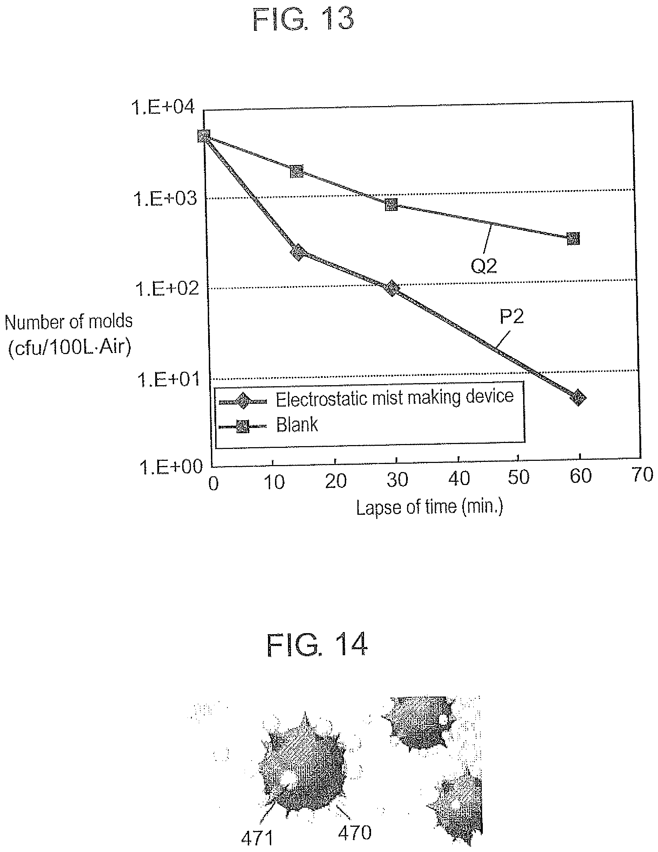

Fig. 13 shows the result of confirming the effect of sterilizing black mold that is a representative type of mold by using an experimental box that is supposed to be a vegetable room of a refrigerator. The conditions set for the experiments are about 70L as the capacity of the experimental box, about 5 °C as the experimental box temperature, and 90%HR or over as the relative humidity in experimental box, and electrostatic mist making device 414 in this example is installed in the experimental box. For the purpose of comparison, a conventional vegetable room is supposed, and the test conducted is the same as the one performed under the same conditions as mentioned above excluding electrostatic mist making device 414. Spray is executed so that the number of initially suspended molds in the specimen mold is 1000 pcs or over per 100L air. The number of molds
is measured by using an air sampler suction method.

In Fig. 13, solid line P2 shows the change in the number of molds in the experimental box in the present example. Also, solid line Q2 shows the change in the number of molds in the experimental box that is supposed to be a conventional vegetable room. As shown in Fig. 13, after 60-minute operation of electrostatic mist making device 414 in this example, the sterilizing effect obtained is 99% with respect to the number of molds. The sterilizing effect can be confirmed with respect to bacteria suspended in the refrigerator as well as the vegetables and inside surfaces of the refrigerator. On the other hand, in the case of the experimental box that is supposed to be a conventional vegetable room, the sterilizing effect obtained is about 95%.

Fig. 14 illustrates an image of anti-virus in the mist generated by electrostatic mist making device 414. Virus usually increases as protein called spikes existing on the surface of virus lives upon nutrient such as saliva. As shown in Fig. 14, extra-fine mist containing OH radical 470 generated by electrostatic mist making device 414 sticks to virus 471 and decomposes the spikes (protein). As a result, virus 471 is unable to live upon the nutrient and is inactivated, and thereby, the increase of virus can be suppressed. In this way, in the present example, the level of ozone or OH radical used is not so high as to extinguish virus 471 itself in a moment, but ozone or OH radical is used to such an extent that inactivation or extinction of virus is effectively promoted by breaking down protein on the surface of virus 471. Accordingly, in the present example, it is possible to suppress the increase of virus in a range such that the freshness of vegetables is not affected.

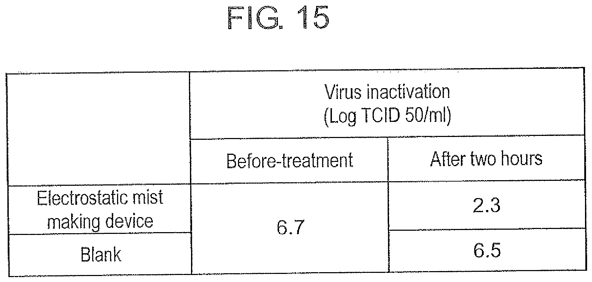

Fig. 15 shows the result of confirming the anti-virus effect of the electrostatic mist making device in the present example by tests using an experimental box. The conditions set for the tests are about 30L as the capacity of the experimental box, room temperature as the experimental box temperature, and 90%HR or over as the relative humidity in experimental box. And, electrostatic mist making device 414 of the present example is installed in the experimental box and then operated at the operation ratio of 30-minite ON and 30-minute OFF. For the purpose of comparison, a conventional vegetable room is supposed, and the test conducted is the same as the one performed without electrostatic mist making device 414. The comparison is made as to the inactivation of virus by using logarithmic values of 50% tissue culture infection degree (TCID50). The smaller the logarithmic value of TCID50, the higher the virus inactivation degree, and it can be said that the difference is significant when it is 2 or over with respect to LogTCID50 value.

From the result of this test, when electrostatic mist making device 414 of the present example is operated for two hours, the difference is 2 or over in LogTCID50/ml with respect to the initial one and the object (blank), and it has been confirmed that a virus inactivating effect can be obtained.

Also, it is not shown, but the same sterilizing effect as for coliform bacteria can also be obtained for yellow staphylococcus that is strong against dryness and comes to live in the refrigerator via human hands. Further, excellent sterilizing effect can be obtained similarly with respect to disease germs such as 0-157, MRSA, and influenza virus. As a result, it has been found that excellent sterilizing effect can be obtained against various types of germs such as bacteria, mold, and virus.

As described above, in the present example, the humidity and freshness preservation of vegetables can be enhanced by means of electrostatic mist making device 414 which sprays mist into vegetable room 405 so that the mist sticks to the vegetables. Also, due to ozone or OH radical generated at the same time with mist generated, mold, bacteria, enzyme, virus or the like existing in the refrigerator, on food surfaces, and in the air in the refrigerator can be eliminated, and also it is possible to enhance the effects of deodorizing the refrigerator, removing harmful substances sticking to food surfaces, and preventing the refrigerator from being stained.

Further, the water is free of mineral components or impurities because dew water is used instead of city water, and it is possible to prevent deterioration of the water holding property due to deterioration or clogging of the water holding material.

On the other hand, the fruits or vegetables stored in vegetable room 405 are indirectly illuminated by light source 437. Light source 437 simultaneously illuminates light including blue light whose central wavelength is 470nm and 2-wavelength light of light including green light whose central wavelength is 520nm. For example, using blue LED and green LED is just enough to meet the purpose. In this case, the lighting intensity is preferable to be 20 to 100Lx on the object surfaces such as vegetables because it is enough to increase vitamin and to ensure illumination that gives a fresh and cool feeling to the user in opening and closing the door. Also, the timing of intermittent illumination is preferable to be 20 to 50Hz. When blue light and green light are intermittently applied to mist-absorbed vegetables and fruits, the vegetables and fruits perform photosynthesis by using the water absorbed, promoting the production of vitamin C.

Also, OH radical generated by intermittent illumination and electrostatic mist gives stresses to the vegetables and fruits and it invites ecological defense reaction. As a result, the production of nutrients such as vitamin C, vitamin A, carotin, polyphenol, and ubiquinone which are antioxidative substances is promoted, making the vegetables and fruits high in nutrient value.

In the present example, an antibacterial device is configured by electrostatic mist making device 414 which sprays mist, using water gathering plate 423. However, when electrostatic mist making device 414 is used as an antibacterial device the same as in this example, and discharge is executed without using a water supply device such as water gathering plate 423, then electrostatic mist making device 414 will become an antibacterial device which sprays no mist liquid and is able to generate ozone gas and minus ion.

Accordingly, as another type of ozone generator specifically described in the present example, it is allowable to install the device in place of electrostatic mist making device 414 without a water supply device. In that case, water gathering plate 423 is not needed and it is naturally unnecessary to cool water gathering plate 423, and therefore, it is possible to install electrostatic mist making device 414 as an antibacterial device in an optional place in the refrigerator.

As described above, in this example, a proper quantity of fine mist is sprayed to the vegetables and fruits stored in container 433 by means of electrostatic mist making device 414, and in addition, blue light and green light are intermittently illuminated by light source 437. In this way, it is possible to promote the normal photosynthesis of vegetables and fruits and at the same time to enhance the ecological defense reaction of vegetables and fruits. Accordingly, the vegetables and fruits will not wither during storage, increasing nutrients such as vitamins, and the foods can be stored maintaining high nutrient value and quality.

### Example 5

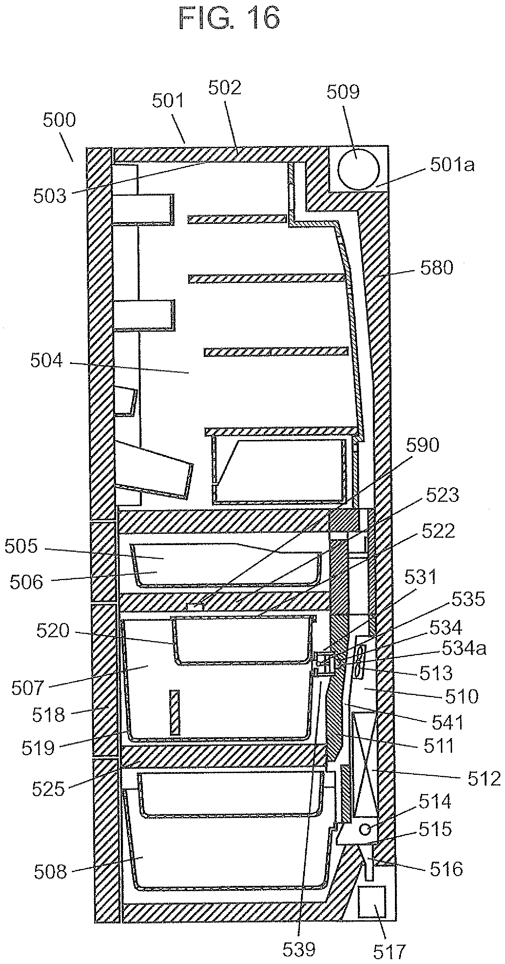

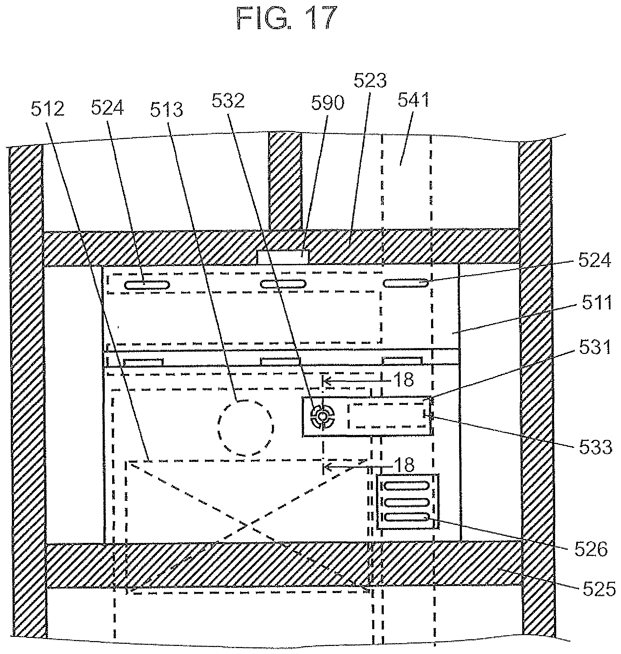

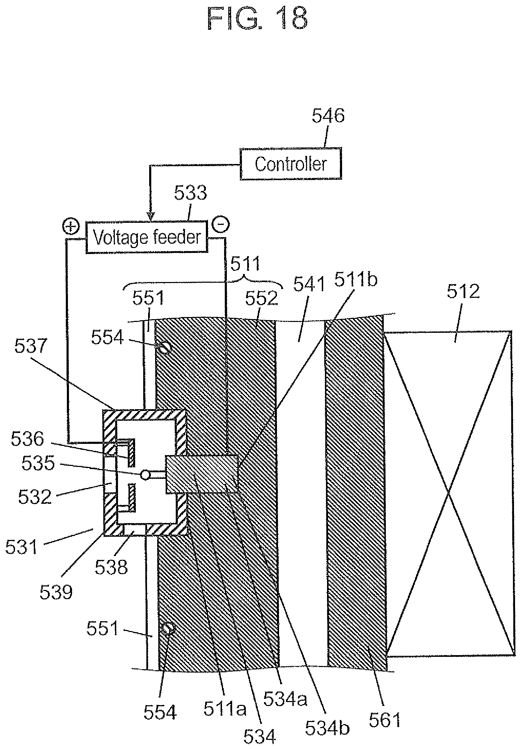

Fig. 16 is a vertically sectional view showing the right and left cut-away sections of a refrigerator in the example 5. Fig. 17 is a front view of an essential portion showing the back of a vegetable room of the refrigerator in the example. Fig. 18 is a sectional view along line 18-18 of Fig. 17 with respect to the periphery of an electrostatic mist making device disposed in a vegetable room of the refrigerator in the example.

In the present example, for the same portions as described in the examples 1, 2 and 4 and embodiment with respect to configuration and technical concept, the detailed description is omitted. For such a configuration that the same content and technical concept mentioned in the above examples 1, 2 and 4 and embodiment can be applied to this example, it is possible to realize a configuration combined with the technical content and configuration mentioned in the above examples 1, 2 and 4 and embodiment.

Particularly, in this example, another embodiment of the electrostatic mist making device that is an antibacterial device in the example 4 is mainly described. Accordingly, the light source is not described, but the technology applied is same as for the one applied to the light source described in the examples 1, 2 and 4 and embodiment.

In the figure, heat insulated box 501 that is the main body of refrigerator 500 is formed of outer box 502 mainly using steel sheets, inner box 503 formed from resin such as ABS, and foamed heat insulator 580 such as hard foam urethane filled into spaces between outer box 502 and inner box 503. In this configuration, heat insulated box 501 is heat-insulated from the circumference and thermally divided into a plurality of storage rooms by means of partition walls. That is, at the uppermost position, cold room 504 is disposed as a first storage room. Under cold room 504 are disposed temperature changeable room 505 as a fourth storage room and ice making room 506 as a fifth storage room in a lateral fashion. Under temperature changeable room 505 and ice making room 506 is disposed vegetable room 507 as a second storage room. At the lowest position, freezer room 508 is disposed as a third storage room.

Cold room 504 is usually set to 1 °C to 5 °C that is the lower limit non-freeze temperature for the purpose of refrigeration storage. Vegetable room 507 is set to 2 °C to 7 °C that is a temperature equal to or a little higher than the temperature of cold room 504. Freezer room 508 is set to the freezing temperature zone usually ranging from - 22 °C to - 15 °C for the purpose of freeze storage. However, for improving the condition of freeze storage, it is sometimes set to, for example, a temperature as low as - 30°C or - 25 °C.

Temperature changeable room 505 is able to switch the temperature to a temperature zone previously set between the refrigeration temperature zone and the freeze temperature zone other than the temperature zones for the cold room set at 1 °C to 5 °C, vegetable room set at 2 °C to 7 °C, and freezer room usually set at - 22 °C to - 15 °C. Temperature changeable room 505 is a storage room provided with an independent door disposed beside ice making room 506, and it has a drawer type door.

In the present example, temperature changeable room 505 is a storage room including the refrigeration and freeze temperature zones. However, it is allowable to leave the refrigerating operation to cold room 504 and vegetable 507, and the freezing operation to freezer room 508, and to use temperature changeable room 505 as a storage room only for switching the above temperature zone between refrigeration and freeze. Also, it is allowable to be a storage room fixed at a specific temperature zone.

Ice making room 506 makes ice by using an automatic ice maker (not shown) disposed at the upper portion of the refrigerator, using the water delivered from a water tank (not shown) in refrigerator 504, and stores the ice in a ice container (not shown) arranged at the bottom of the refrigerator.

The top portion of heat insulated box 501 is provided with a concave formed in a step-wise fashion in the direction toward the rear of the refrigerator. Machine room 501a is formed in the step-wise concave. Compressor 509 and the high-pressure side component parts of the freezing cycle such as a dryer (not shown) for dissipating water are housed in machine room 501a. That is, machine room 501a with compressor 509 housed therein is formed in such a manner as to cut into the rear region of the uppermost portion in refrigerator 504.

In this way, machine room 501a including compressor 509 is disposed in the rear region of refrigerator 504 at the uppermost portion of heat insulated box 501 that is used to be a dead zone rather being out of the user's hand. As a result, the machine room space can be effectively used as a storage room space, which is located at the lowest portion of heat insulated box 501, that is a convenient position to use for the user, in a conventional refrigerator. Accordingly, it is possible to greatly improve the storageability and using convenience.

In the present example, it is allowable to apply the configuration described in the following to a refrigerator configured in that a machine room including compressor 509 is arranged in the rear region of the storage room at the lowest portion of heat insulated box 501 that is used to be an arrangement generally employed.

Cooling room 510 for producing cold air is disposed at the back of vegetable room 507 and freezer room 508, which is separate from freezer room discharge air passage 541. Between vegetable room 507, freezer room 508, and cooling room 510 are arranged freezer room discharge air passage 541 for sending cold air to each heat-insulative room and back partition wall 511 formed for insulating heat from each storage room. Also, there is provided partition plate 561 (see Fig. 18) for the purpose of isolation between freezer room discharge air passage 541 and cooling room 510. Evaporator 512 is disposed in cooling room 510. In the upper space of evaporator 512 is arranged cooling fan 513 which sends the cold air from evaporator 512 to cold room 504, temperature changeable room 505, ice making room 506, vegetable room 507, and freezer room 508 by means of a forcible convention system.

Also, in the lower space of evaporator 512, there is provided radiant heater 514 formed of a glass tube for dissipating frost or ice sticking to evaporator 512 and its surroundings during the cooling operation. Further, drain pan 515 is disposed thereunder, which serves to receive the water generated due to defrosting. There is provided drain tube 516 going through from the bottom of drain pan 515 to the outside of the refrigerator. Evaporation tray 517 is disposed out side the refrigerator at the downstream side of drain tube 516.

In vegetable room 507, there are provided lower container 519 placed on a frame fitted to drawer door 518 of vegetable room 507, and upper container 520 placed on lower container 519.

With drawer door 518 closed, lid 522 mainly for closing upper container 520 is held on first partition wall 523 at the upper part of the vegetable room. With drawer door 518 closed, lid 522 is in tight contact with the upper right and left, and back sides, and nearly in contact with the upper front side of upper container 520. Further, the space at the boundary between the lower right and left sides at the back of upper container 520 and lower container 519 is narrowed so as to prevent the humid air in the food storing portion from going outside to such an extent that the operation of upper container 520 is not affected.

Light source 590 is buried in first partition wall 523. Light source 590 is same as in the configuration described in the examples 1, 2 and 4 and embodiment, and the detailed description is omitted.

Between lid 522 and first partition wall 523, as shown in Fig. 17, there is provided a passage of cold air discharged from vegetable room discharge port 524 formed in back partition wall 511. Also, between lower container 519 and second partition wall 525, there is provided a space as a cold air passage. The bottom of back partition wall 511 at the back of vegetable room 507 is provided with vegetable room suction port 526 for returning the heat-exchanged cold air to evaporator 512 after cooling the inside of vegetable room 507.

In the present example, it is allowable to apply the configuration described in the following to a refrigerator which employs a conventional system generally employed such that the door is opened and closed by mans of a frame fitted to the door and a rail installed on the inner box as is conventionally generally employed.

Back partition wall 511 is, as shown in Fig. 18, formed of back partition wall surface 551 formed from resin such as ABS and heat insulator 552 formed from foamed styrol for assuring heat insulation of storage rooms, isolating freezer room discharge air passage 541 and cooling room 510 (see Fig. 16). Here, concave 511a for making the temperature lower than the temperatures at other portions is formed in a part of the inner wall surface of the storage room of back partition wall 511, in which electrostatic mist making device 531 that is an anti-bacterial device is installed.

Electrostatic mist making device 531 is mainly formed of part of making to mist 539, voltage feeder 533, and outer case 537. Mist port 532 and humidity supply port 538 are formed in a part of outer case 537. Part of making to mist 539 is provided with electrode of making to mist 535 that is atomizing tip portion, and electrode of making to mist 535 is securely connected with cooling pin 534 that is a heat transfer cooling member formed from an excellent heat transfer material such as aluminum, copper, and stainless steel.

Electrode of making to mist 535 is an electrode connecting member formed from excellent heat transfer material such as aluminum, stainless steel, and brass. Electrode of making to mist 535 is fixed nearly at the center of one end of cooling pin 534 and is electrically connected to one end of the wiring from voltage feeder 533.

Cooling pin 534 that is heat transfer cooling member is, for example, formed in columnar shape of about 10 mm in diameter and about 15 mm in length. Electrode of making to mist 535 is about 1 mm in diameter and about 5 mm in length. Cooling pin 534 has a great heat capacity of 50 to 1000 times, preferably 100 to 500 times greater, as compared with electrode of making to mist 535. Thus, the heat capacity of cooling pin 534 is 50 times or over, preferably 100 times or over, as compared with the heat capacity of electrode of making to mist 535, and thereby, it is possible to further prevent a great influence due to temperature change of the cooling section from being directly given to electrode of making to mist 535. As a result, it is possible to realize stable spray of mist with less fluctuating load. Also, as the upper limit value of the heat capacity, cooling pin 534 has a heat capacity of 1000 times or less, preferably 500 times or less, as compared with electrode of making to mist 535. As for the upper limit value, if the heat capacity is excessive, considerable energy will be required for cooling the cooling pin 534, making it difficult to save the energy for cooling the cooling pin 534. However, keeping the heat capacity less than the upper limit, a great influence can be prevented from being given to electrode of making to mist 535 in case of the heat fluctuating load from the cooling section, and it is possible to execute stable cooling of electrode of making to mist 535 while achieving the energy-saving purpose. Further, with the heat capacity kept less than the upper limit, it is possible to keep the time lag required for cooling of electrode of making to mist 535 via cooling pin 534 within an appropriate range. Accordingly, the delay of rise in cooling of electrode of making to mist 535 or water supply to electrostatic mist making device 531 can be prevented and it becomes possible to execute stable cooling of electrode of making to mist 535.

Also, the material for cooling pin 534 is preferable to be a high heat transfer material such as aluminum and copper, and it is desirable to be covered with heat insulator 552 for the purpose of efficient transfer of cold from one end (vegetable room 507 side) to the other end (electrode of making to mist 535 side) of cooling pin 534.

Further, since it is necessary to maintain heat transfer between electrode of making to mist 535 and cooling pin 534 for a long period of time, thermal resistance is suppressed by pouring epoxy material into the connection for preventing intrusion of humidity or the like. In addition, electrode of making to mist 535 and cooling pin 534 are secured. Also, it is allowable to secure them, for example, by press-fitting electrode of making to mist 535 to cooling pin 534 in order to reduce thermal resistance.

Further, since it is necessary for cooling pin 534 to transfer cold in heat insulator 552 for heat-insulating the storage room from evaporator 512 or the air passage, the length thereof is preferable to be 5 mm at least, preferably 10 mm at least. However, if the length is over 30 mm, the effect will be lowered.

Electrostatic mist making device 531 installed in vegetable room 507 is in high-humidity environment, and there is a possibility that the humidity gives influences to cooling pin 534. Therefore, it is preferable for cooling pin 534 to select use a metal material having corrosion and rust resisting properties or a material surface-coated with Alumite or the like.

Also, in this example, since the shape of cooling pin 534 that is heat transfer cooling member is columnar, even when it is a little tight to fit in concave 511a of heat insulator 552, it can be press-fitted while slightly turning electrostatic mist making device 531. Accordingly, cooling pin 534 can be more tight fitted without gaps. Also, the shape of cooling pin 534 is allowable to be rectangular or equilaterally polygonal, and in the case of polygons, positioning will be easier as compared with columns and it is possible to dispose electrostatic mist making device 531 in correct position.

Further, disposing electrode of making to mist 535 that is atomizing tip portion on the central axis of cooling pin 534, it is possible to keep constant the distance between opposed electrode 536 and electrode of making to mist 535 even when cooling pin 534 is turned to be press-fitted, and thereby, to maintain a stable discharge distance.

Cooling pin 534 that is heat transfer cooling member is fixed in outer case 537, and cooling pin 534 itself has convex 534a protruded from the outer case. Cooling pin 534 has convex 534a at the opposite side of electrode of making to mist 535, and convex 534a is fitted in deepest concave 511b that is deeper than concave 511a of back partition wall 511.

Accordingly, there is provided deepest concave 511b that is deeper than concave 511a at the back side of cooling pin 534 that is a heat transfer cooling member. Therefore, at the portion of deepest concave 511b, the cooling room 510 side of heat insulator 552, that is, the freezer room discharge air passage 541, heat insulator 552 is thinner than the other portions of back partition wall 511 at the back side of vegetable room 507. Heat insulator 552 as heat relieving member is installed so that cooling pin 534 is cooled with cold air of cooling room 510 from the back via heat insulator 552 that is heat relieving member.

Also, cold air produced by cooling room 510 is used to cool cooling pin 534 that is heat transfer cooling member. Since cooling pin 534 is formed by a piece of metal being excellent in heat transfer, the cooling section is able to execute cooling necessary for dew condensation of electrode of making to mist 535 that is atomizing tip portion only by heat transfer form freezer room discharge air passage 541 in which the cold air produced by evaporator 512 flows, and it is possible to perform dew condensation.

Thus, in the present example, an antibacterial device having a simple structure can be used to spray mist, and it is possible to realize highly reliable atomization with less trouble. Also, cooling pin 534 as a heat transfer cooling member and electrode of making to mist 535 as an atomizing tip portion can be cooled by using the cooling source of the refrigeration cycle, and it is possible to execute energy-saved atomization.

Also, in this case, cooling pin 534 as heat transfer cooling member in the present example is shaped to have convex 534a at the opposite side of electrode of making to mist 535 that is atomizing tip portion. Accordingly, end portion 534b at the convex 534a side of part of making to mist 539 is nearest the cooling section. Therefore, the end portion 534b side of cooling pin 534, farthest away from electrode of making to mist 535, is first cooled with the cold air of the cooling section.

Further, at the position opposing to electrode of making to mist 535, doughnut disk-like opposed electrode 536 is disposed at the vegetable room 507 side in such manner as to keep a constant distance from the tip of electrode of making to mist 535, and mist port 532 is formed on the extension thereof.

Also, voltage feeder 533 is disposed in the vicinity of part of making to mist 539, and the negative potential side of voltage feeder 533 which generates high voltage is electrically connected to electrode of making to mist 535, while the positive potential side thereof is electrically connected to opposed electrode 536.

Since discharge always takes place due to mist spray in the vicinity of electrode of making to mist 535, there is a possibility that corrosion occurs at the tip of electrode of making to mist 535. Generally, refrigerator 500 is operated for a long period of over 10 years. Therefore, it is necessary to conduct reliable surface treatment on the surfaces of electrode of making to mist 535, and it is desirable to employ, for example, nickel plating, gold plating, or platinum plating method.

Opposed electrode 536 is, for example, formed from stainless steel, and also, it is necessary to assure reliability for a long period of time. So, it is desirable to perform surface treatment such as platinum plating in order to prevent sticking of foreign matters and staining in particular.

Voltage feeder 533 is communicated with controller 546 of the refrigerator main body, and it is controlled to turn ON/OFF the high voltage of voltage feeder 533 according to the input signal from refrigerator 500 or electrostatic mist making 531.

In the present example, voltage feeder 533 is installed in electrostatic mist making device 531, which serves to keep the high temperature and low humidity atmosphere in vegetable room 507. For achieving the purpose, a moisture-proof material or coating material is applied to the board surfaces of voltage feeder 533. Such coating is not needed when voltage feeder 533 is installed in a high-temperature position outside the storage room.

On back partition wall surface 551 which secures electrostatic mist making device 531, heater 554 for adjusting the temperature of vegetable room 507 or preventing dew gathering on the surfaces is installed between back partition wall surface 551 and heat insulator 552.

The operation of refrigerator 500 in the present example having such a configuration will be described in the following.
First, the operation of the refrigeration cycle is described. The refrigeration cycle is activated to perform the cooling operation according to the signal from a control board (not shown) in accordance with the temperature set in the refrigerator. The high-temperature high-pressure refrigerant discharged with compressor 509 operated is condensed and liquefied by a condenser (not shown). Further, it is condensed and liquefied while preventing dew gathering of heat insulated box 501 through the side and rear surfaces of heat insulated box 501 that is the refrigerator main body, and the refrigerant piping (not shown) disposed in the front space of heat insulated box 501 that is the refrigerator main body, and then it goes to the capillary tube (not shown). After that, in the capillary tube, it is heat-exchanged with suction pipe (not shown) leading to compressor 509 and reduced in pressure before going to evaporator 512 in the form of low-temperature low-pressure refrigerant.

The low-temperature low-pressure refrigerant is heat-exchanged with the air in each storage room such as freezer room discharge air passage 541 which is transported by the operation of cooling fan 513, and then, the refrigerant in evaporator 512 is evaporated and vaporized. In this case, cold air for cooling each storage room is produced in cooling room 510. The low-temperature cold air is separated by using air passages or damper and applied from cooling fan 513 to cold room 504, temperature changeable room 505, ice making room 506, vegetable room 507, and freezer room 508, thereby executing the cooling at temperatures of the intended temperature zones. Particularly, vegetable room 507 is adjusted so as to be kept in a range from 2 °C to 7 °C by regulating the cold air distribution and ON/OFF operation of heater 554. Generally, there is provided no refrigerator temperature detector in many cases.

The air after cooling the cold room 504 returns to the cold room for the purpose of circulation to evaporator 512. After that, it is discharged into vegetable room 507 from vegetable room discharge port 524 formed in the way going to freezer room discharge air passage 541, and then it executes indirect cooling of the peripheries of upper container 520 and lower container 519, and thereafter, it returns again to evaporator 512 from vegetable room suction port 526.

As to a part of the portion in relatively high-humidity environment of back partition wall 511, heat insulator 552 is thinner in wall thickness than other portions, and particularly, deepest concave 511b is disposed at the back of cooling pin 534. The heat insulator at this portion is, for example, about 2 mm to 10 mm in thickness. In refrigerator 500 in this example, this thickness is suited for a heat relieving member positioned between cooling pin 534 and the cooling section. Back partition wall 511 is formed with concave 511a, and electrostatic mist making device 531 with convex 534a of cooling pin 534 protruded is fitted and disposed in deepest concave 511b at the most back of concave 511a.

Cold air of about - 15 to 25 °C produced by evaporator 512 in operation of the cooling system is delivered by cooling fan 513 to freezer room discharge air passage 541 at the back of cooling pin 534. Cooling pin 534 that is heat transfer cooling member is for example cooled to about 0 to - 10 °C through heat transfer from the air passage surfaces. In this case, cooling pin 534 is very easy to transfer heat because it is an excellent heat transfer member, and electrode of making to mist 535 that is atomizing tip portion is also indirectly cooled to about 0 to - 10 °C via cooling pin 534.

Here, since vegetable room 507 is set at 2 °C to 7 °C in temperature and kept in a state of relatively high humidity due to transpiration from vegetables or the like, when the temperature of electrode of making to mist 535 as an atomizing tip is lower than the dew point temperature, it will cause generation of water and sticking of water drops to electrode of making to mist 535 including the tip thereof.

Negative voltage is applied to electrode of making to mist 535 that is atomizing tip portion with water drops sticking thereto, and with opposed electrode 536 disposed at the positive voltage side, high voltage (for example, 4 to 10kV) is applied between the electrodes from voltage feeder 533. In this case, corona discharge takes place between the electrodes, and water drop sticking to the tip of electrode of making to mist 535 that is atomizing tip portion is atomized due to electrostatic energy. Further, because the water drop is electrified, nano-level fine mist having invisible charge of a few nm level is generated due to Rayleigh scattering, and it is accompanied by generation of ozone or OH radical. The voltage applied between the electrodes is as high as 4 to 10kV, and the discharge current value at that time is at a level of a few µA, and the input is as low as 0.5 to 1.5W.

Specifically, when electrode of making to mist 535 is at the reference potential side (0V), and opposed electrode 536 is at the high voltage side (+7kV), due to dew water sticking to the tip of electrode of making to mist 535, the air insulating layer between electrode of making to mist 535 and opposed electrode 536 is destroyed, causing discharge to occur due to static electricity. In this case, the dew water is electrified and becomes fine particles. Further, because opposed electrode 536 is at the plus side, the electrified fine mist is attracted thereto and the water drops are further atomized, then nano-level fine mist having invisible charge of a few nm level with radical included is attracted to opposed electrode 536, and the fine mist is sprayed toward vegetable room 507 due to the inertia force.

When electrode of making to mist 535 is free of water, the discharge distance is increased and it is unable to break the air insulating layer, therefore no discharge takes place. Accordingly, no current flows between electrode of making to mist 535 and opposed electrode 536.

Also, electrode of making to mist 535 can be indirectly cooled by cooling the cooling pin 534 that is an heat transfer cooling member without direct cooling of electrode of making to mist 535 that is atomizing tip portion. Accordingly, cooling pin 534 as a heat transfer cooling member is devised so as to have heat capacity greater than that of electrode of making to mist 535, and thereby, it is possible to reduce the great influence directly given to electrode of making to mist 535 that is atomizing tip portion. Further, electrode of making to mist 535 can be cooled, and also, abrupt change in temperature of electrode of making to mist 535 can be suppressed by accomplishing the role of cold storage, and it is possible to realize a stable quantity of mist spray.

In this way, electrode of making to mist 535 can be indirectly cooled by cooling the cooling pin 534 that is heat transfer cooling member without direct cooling of electrode of making to mist 535 that is atomizing tip portion. Accordingly, the heat transfer cooling member is devised so as to have heat capacity greater than that of electrode of making to mist 535, and thereby, it is possible to reduce the great influence directly given to electrode of making to mist 535 due to temperature change of the cooling section and to cool the electrode of making to mist 535 that is atomizing tip portion. Accordingly, the load variation of electrode of making to mist 535 can be suppressed and it is possible to realize a stable quantity of mist spray.

As described above, opposed electrode 536 is disposed in a position opposing to electrode of making to mist 535, and there is provided voltage feeder 533 for generating a high voltage potential difference between electrode of making to mist 535 and opposed electrode 536, and thereby, stable electric field can be built up in the vicinity of electrode of making to mist 535. In this way, the atomization and spraying direction can be stabilized, and it is possible to enhance the accuracy of fine mist sprayed into containers (lower container 519, upper container 520). Accordingly, the accuracy of part of making to mist 539 can be enhanced and it is possible to provide highly reliable electrostatic mist making device 531.

Further, cooling pin 534 that is heat transfer cooling member is cooled via heat insulator 552 that is heat relieving member. Accordingly, electrode of making to mist 535 is indirectly cooled by cooling pin 534 as described above, and in addition, it is possible to execute indirect cooling with a double structure via heat insulator 552 that is heat relieving member. As a result, it is possible to prevent electrode of making to mist 535 that is atomizing tip portion from being excessively cooled.

When the temperature of electrode of making to mist 535 is lowered 1°K, the water producing speed at the tip thereof increases about 10%. However, if electrode of making to mist 535 is excessively cooled, the dewing speed will abruptly increase, and it is accompanied by a fear of causing the quantity of dew to increase and the load of part of making to mist 539 to become greater, resulting in increase of the input to electrostatic mist making device 531 and freezing or mist trouble of part of making to mist 539. However, such trouble due to the increase in load of part of making to mist 539 can be prevented, and it is possible to ensure the appropriate quantity of dew and to realize stable mist spray with a low level of input.

Also, the shape of cooling pin 534 as a heat transfer cooling member is desirable to be columnar for ease in assembling. Precisely, it is allowable to be rectangular or regular polygonal, but in the case of columnar shape, when fitted into concave 511a of heat insulator 552, it can be fitted while tilting electrostatic mist making device 531. On the other hand, in the case of polygonal shape, positioning is easier as compared with the case of columnar shape.

Further, since electrode of making to mist 535 is installed on the central axis of cooling pin 534, even when cooling pin 534 is turned to set in place, the distance between opposed electrode 536 and electrode of making to mist 535 can be kept constant, and it is possible to maintain a stable discharge distance.

Also, electrode of making to mist 535 that is atomizing tip portion is indirectly cooled with a double structure via cooling pin 534 as a heat transfer cooling member and heat insulator 552 as heat relieving member, and thereby, it is possible to further reduce the great influence directly given to electrode of making to mist 535 that is atomizing tip portion due to change in temperature of the cooling section. Accordingly, the load change of electrode of making to mist 535 can be suppressed, and it is possible to realize a stable quantity of mist spray.

Further, cooling pin 534 as a heat transfer cooling member is cooled by using cold air produced by cooling room 510, and cooling pin 534 is formed by a metal piece assuring excellent heat transfer. Accordingly, the cooling section is able to execute necessary cooling only by heat transfer from freezer room discharge air passage 541 in which the cold air produced by evaporator 512 flows.

Also, in this case, cooling pin 534 as heat transfer cooling member in the present example is shaped so as to have convex 534a at the opposite side of electrode of making to mist 535 that is atomizing tip portion. Therefore, end portion 534b at the convex 534a side of part of making to mist 539 is closest to the cooling section. Accordingly, the end portion 534b side of cooling pin 534 that is heat transfer cooling member, farthest away from electrode of making to mist 535 that is atomizing tip portion, is first cooled with the cold air of the cooling section.

In this way, since the cooling section is structurally very simple, it is possible to realize part of making to mist 539 that is trouble-free and highly reliable. Also, cooling pin 534 that is heat transfer cooling member and electrode of making to mist 535 that is atomizing tip portion can be cooled by using the cooling source of the refrigeration cycle, and it is possible to perform energy-saved atomization.

Thus, cooling is performed by the cooling section, end portion 534b of cooling pin 534 that is heat transfer cooling member, farthest away from electrode of making to mist 535 that is atomizing tip portion, is first cooled. As a result, a great heat capacity of cooling pin 534 is cooled before electrode of making to mist 535 is cooled by cooling pin 534. Accordingly, a great influence directly given to electrode of making to mist 535 due to temperature change of the cooling section can be further reduced, and it is possible to realize stable mist spray with less fluctuating load.

Also, back partition wall 511 disposed on part of making to mist 539 is provided with concave 511a partially at the vegetable room 507 side. Part of making to mist 539 having convex 534a is inserted into concave 511a. In this way, heat insulator 552 which configures back partition wall 511 of vegetable room 507 can be used as a heat relieving member. Accordingly, adjusting the thickness of heat insulator 552 without using any special heat relieving member, a heat relieving member capable of properly cooling the electrode of making to mist 535 that is atomizing tip portion can be formed, and it is possible to make part of making to mist 539 structurally very simple.

Further, part of making to mist 539 having convex 534a of cooling pin 534 is inserted into concave 511a. This enables reliable installation of part of making to mist 539 on the partition wall. At the same time, the generation of protrusions toward the vegetable room 507 as a storage room can be suppressed, and it is possible to improve the safety because protrusions are hardly touched by human hands.

Also, since part of making to mist 539 is not protruded outside the back partition wall 511 of vegetable room 507 as a storage room, no influence is given to the air passage section area of freezer room discharge air passage 541, and it is possible to prevent the level of cooling from lowering due to increase of air passage resistance.

Further, concave 511a is formed in a part of vegetable room 507, in which part of making to mist 539 is inserted. As a result, no influence will be given to the capacity for storing fruits or vegetables. Also, cooling pin 534 that is heat transfer cooling member can be properly cooled and, for other portions, it is possible to maintain wall thickness capable of assuring heat insulation. Accordingly, dew gathering in outer case 537 can be prevented, and it is possible to enhance the reliability.

Also, cooling pin 534 as an electrode connecting member maintains a certain level of heat capacity and is able to relieve the response of heat transfer from freezer room discharge air passage 541. Accordingly, it is possible to suppress the temperature change of electrode of making to mist 535 that is atomizing tip portion. Also, since cooling pin 534 functions as a heat storing member, it is possible to prevent freezing from occurrence by keeping the time for dew gathering of electrode of making to mist 535 that is atomizing tip portion.

Further, cooling pin 534 assuring excellent heat transfer is combined with heat insulator 552, and thereby, low-temperature heat can be transferred without losses. Also, since thermal resistance of the bonding portion between cooling pin 534 and electrode of making to mist 535 is suppressed, it ensures proper follow-up with respect to the temperature change of electrode of making to mist 535 and cooling pin 534. Also, the bonding is enough to prevent intrusion of humidity and the level of thermal bonding is maintained for a long period of time.

Also, vegetable room 507 is in a high-humidity environment, and there is a possibility that the humidity gives influences to cooling pin 534 that is heat transfer cooling member. However, cooling pin 534 is surface-treated by coating anticorrosive and rust-proofing metal material or Alumite, and therefore, it is free from rusting and hard to increase in surface heat resistance, making it possible to assure stable heat transfer.

Further, the surface of electrode of making to mist 535 that is atomizing tip portion is plated with nickel, gold or platinum. Therefore, wearing due to discharge at the tip of electrode of making to mist 535 can be suppressed, and as a result, it is possible to maintain the shape of the tip of electrode of making to mist 535. Accordingly, it becomes possible to execute the spray for a long period of time, and also, the shape of liquid drop at the tip is stabilized.

When fine mist is sprayed from electrode of making to mist 535, an ionic wind is generated. Then, fresh and highly humid air flows from humidity supply port 538 disposed in outer case 537 into the electrode of making to mist 535 portion in outer case 537. In this way, mist can be continuously sprayed.

The fine mist generated at electrode of making to mist 535 is mainly sprayed into lower container 519. However, because the mist is formed of very fine particles, having high diffusivity, and therefore the fine mist may also reach the upper container 520. The fine mist sprayed is produced as a result of high-voltage discharge, and is electrified with minus charge. On the other hand, fruits or vegetables including green leaf vegetables and fruits are stored in vegetable room 507, and these fruits or vegetables are liable to wither due to transpiration or transpiration during storage. Vegetables and fruits stored in the vegetable room usually include those rather half-withered due to transpiration on the way home after purchase or transpiration during storage, and have plus electric charge. Accordingly, the sprayed mist is liable to gather on the surfaces of vegetables, and it gives rise to enhancement of freshness preservation.

Also, nano-level fine mist sticking to vegetable surfaces contains OH radical and a slight amount of ozone. Accordingly, the mist has antibacterial, sterile and bactericidal effects, and in addition, it promotes elimination of agrochemicals by oxidizing decomposition and increase of nutrients such as vitamin C by anti-oxidation.

When electrode of making to mist 535 is free of water, the discharge distance is increased and it is unable to break the air insulating layer, therefore no discharge takes place. Accordingly, no current flows between electrode of making to mist 535 and opposed electrode 536. The high voltage of voltage feeder 533 can be turned ON/OFF with this phenomenon detected by controller 546 of refrigerator 500.

Also, in this example, voltage feeder 533 is disposed at a relatively low-temperature low-humidity position in vegetable room 507. Accordingly, voltage feeder 533 has a moisture-proof and water-proof structure by potting or coating material in order to protect the circuit. When voltage feeder 533 is installed outside the storage room, it is not necessary to make this configuration.

As described above, in the present example, light source 590 illuminates the fruits or vegetables with blue light and green light combined. Accordingly, high-quality fruits or vegetables enhanced in nutrient value can be stored, and at the same time, as it is easier to associate the illumination with the food to be stored, the user is able to see the temperature condition in the storage room at first sight.

Also, in the present example, there are provided vegetable room 507 as a heat-insulated storage room and electrostatic mist making device 531 (part of making to mist 539) for spraying the mist in vegetable room 507. Part of making to mist 539 of electrostatic mist making device 531 has electrode of making to mist 535 as atomizing tip portion electrically connected to voltage feeder 533 which generates high voltage for the purpose of spraying the mist. Also, part of making to mist 539 has opposed electrode 536 disposed in a position opposing to electrode of making to mist 535. And, part of making to mist 539 has cooling pin 534 as heat transfer cooling member connected to electrode of making to mist 535. Also, part of making to mist 539 has a cooling section for cooling the cooling pin 534 to a temperature lower than the dew point that is the temperature at which water in air gathers dew. The cooling section serves to indirectly cool electrode of making to mist 535 to a temperature lower than the dew point by cooling the cooling pin 534. In this way, water in air gathers dew on electrode of making to mist 535 and it is sprayed into vegetable room 507 in the form of mist. As a result, excess vapor in vegetable room 507 easily precisely forms dew on electrode of making to mist 535. That is, nano-level fine mist is generated by high-voltage corona discharge between electrode of making to mist 535 and opposed electrode 536. The fine mist atomized and sprayed uniform sticks to the surfaces of fruits or vegetables, suppressing transpiration from fruits or vegetables and enhancing the preservation of freshness. Also, the mist gets into the tissue from cell gaps or pores in fruit and vegetable surfaces and supplies water into withered cells, enabling the fruits or vegetables to restore a crisp state.

Further, since discharge occurs between electrode of making to mist 535 and opposed electrode 536, the direction of spray is stabilized as a stable electric field can be built up, and it is possible to accurately spray fine mist into the containers (lower container 519, upper container 520).

Also, due to ozone and OH radical generated at the same time when mist is generated, it is possible to enhance the effects such as deodorization, elimination of harmful substances from food surfaces, and prevention of contamination.

Further, the sprayed mist can be directly applied to the foods in the container of vegetable room 507. Therefore, the mist can be stuck to vegetable surfaces by using the electric potential of mist and vegetable. Accordingly, it is possible to further enhance the antibacterial property of fruit and vegetable surfaces.

Also, excess vapor in vegetable room 507 is dewed on electrode of making to mist 535 to let water drops to stick thereto, and mist is sprayed. Accordingly, it is not necessary to use a defrosting hose or purifying filter to supply water for spraying the mist, or a water passage directly connected to city water, storage tank, and the like. Also, a water feeder such as a pump is not used, and it is possible to supply fine mist to vegetable room 507 with a simple structure that requires no complicated configuration.

Thus, the structure is very simple and fine mist can be reliably supplied to vegetable room 507. Accordingly, the possibility of causing refrigerator 500 to become out of order can be greatly reduced. As a result, it is possible to enhance the reliability and to improve the quality of refrigerator 500.

Further, since dew water is used instead of city water, the water contains no mineral or impurities, making it possible to prevent deterioration of the water holding material used and deterioration of the water holding capacity due to clogging thereof.

Also, because it is not a supersonic atomization system based on supersonic vibration, there is no fear of noise or vibration such as resonance caused due to supersonic frequency generation.

Further, no storage tank is needed, and there is no need of a water level sensor to cope with breakdown of the supersonic element due to water shortage in use of a storage tank. Accordingly, it is possible to provide the refrigerator with an atomizing device with a simple structure.

Also, since the portion in which voltage feeder 533 is housed is also built into back partition wall 511 and is cooled, the temperature rise of the substrate can be suppressed. In this way, it is possible to reduce influence caused by temperature change in vegetable room 507.

Further, in the present example, there is provided evaporator 512 for cooling storage rooms 504, 505, 506, 507, 508. Also, back partition wall 511 is disposed for heat insulating the cooling room 510 with evaporator 512, and vegetable room 507. In addition, back partition wall 511 is equipped with electrostatic mist making device 531. In this way, it is installed in the inside space of vegetable room 507, and thereby, the storing capacity is not reduced. Also, it is disposed in the back position beyond reach of the user's hands, thereby enhancing the safety.

Also, in this example, cooling pin 534 connected to electrode of making to mist 535 that is atomizing tip portion of electrostatic mist making device 531 is a piece of metal assuring excellent heat transfer. The cooling section for cooling the cooling pin 534 uses heat transferred from freezer room discharge air passage 541 in which the cold air generated by evaporator 512 flows. In this way, the temperatures of cooling pin 534 that is heat transfer cooling member and electrode of making to mist 535 that is atomizing tip portion can be easily set by adjusting the wall thickness of heat insulator 552 of back partition wall 511 that is heat relieving member. Also, with heat insulator 552 as heat relieving member held there between, there is no leakage of cold air and it is possible to prevent reliability lowering such as frost sticking or dew gathering trouble of outer case 537.

Also, in the present example, back partition wall 511 provided with electrostatic mist making device 531 (with part of making to mist 539) includes concave 511a formed in a part of vegetable room 507. Cooling pin 534 connected to electrode of making to mist 535 that is atomizing tip portion of electrostatic mist making device 531 is inserted into concave 511a. In this configuration, there is no influence to the storing capacity for storing foods such as fruits or vegetables. Also, cooling pin 534 can be reliably cooled. At the same time, for portions other than concave 511a in electrostatic mist making device 531, wall thickness that is enough to assure heat insulation can be maintained and it is possible to prevent dew gathering in outer case 537 and to improve the reliability.

In this example, electrostatic mist making device 531 applies high voltage between electrode of making to mist 535 and opposed electrode 536, and ozone is also generated when fine mist is generated. However, the ozone concentration in vegetable room 507 can be adjusted by ON-OFF operation of electrostatic mist making device 531. By proper adjustment of ozone concentration, it is possible to prevent deterioration such as yellowing of vegetables due to excessive ozone and to enhance the sterilizing and antibacterial actions on vegetable surfaces.

In the present example, electrode of making to mist 535 is set at the reference potential side (0V), positive potential (+7kV) is applied to opposed electrode 536 in order to generate high-voltage potential difference between the electrodes. However, it is allowable to be configured in that opposed electrode 536 is set at the reference potential side (0V), and negative potential (-7kV) is applied to electrode of making to mist 535 in order to generate high-voltage potential difference between the electrodes. In that case, because opposed electrode 536 closer to vegetable room 507 is at the reference potential side, there is no fear of electric shock trouble even when the user of the refrigerator brings the hand close to opposed electrode 536. Also, when electrode of making to mist 535 is set to a negative potential of -7kV, it is not always necessary to dispose opposed electrode 536 when vegetable room 507 is set at the reference potential side.

In that case, for example, a conductive container is disposed in heat-insulated vegetable room 507, and the conductive container is electrically connected to a retaining member (conductive) of the container, and it is detachable from the retaining member. Also, the retaining member is connected to the reference potential portion and grounded (0V).

In this way, since part of making to mist 539, container, and retaining member always maintain a potential difference, stable electric field is formed. As a result, reliable spray can be executed from part of making to mist 539. Also, since the whole container is set at the reference potential, the sprayed mist can be entirely diffused in the container. Further, it is possible to prevent peripheral objects from being electrified.

As described above, without disposing opposed electrode 536, when there is provided a retaining member grounded to a part of vegetable room 507, mist spray can be executed by generating potential difference as against electrode of making to mist 535. Accordingly, it is possible to reliably spray mist from the part of making to mist because stable electric field is built up in simple structure.

Also, with a retaining member disposed at the container side, the whole container is set at the reference potential, and sprayed mist can be entirely diffused in the container. Further, it is possible to prevent peripheral objects from being electrified.

In this example, the passage for cooling the cooling pin 534 that is heat transfer cooling member is freezer room discharge air passage 511. However, it is allowable to be the discharge air passage of ice making room 506 or the low-temperature air passage such as the return air passage of the freezer room. In this way, the installable place of electrostatic mist making device 531 becomes increased.

In the present example, the cooling section for cooling the cooling pin 534 that is heat transfer cooling member is the cold air cooled by using the cooling source generated in the refrigeration cycle of refrigerator 500. However, it is also allowable to use the heat transferred from the cooling pipe using cold air or low temperature from the cooling source of refrigerator 500. Thus, cooling pin 534 as heat transfer cooling member can be cooled to optional temperatures by adjusting the temperature of the cooling pipe, thereby making it easier to control the temperature in cooling the electrode of making to mist 535.

In the present example, there is provided no water holding material around electrode of making to mist 535 of electrostatic mist making device 531. However, it is allowable to provide a water holding material. Thus, dew water generated in the vicinity of electrode of making to mist 535 can be kept around electrode of making to mist 535, and it can be supplied to electrode of making to mist 535 as needed.

In this example, a storage room to which mist is sprayed from part of making to mist 539 of electrostatic mist making device 531 is vegetable room 507. However, it is also allowable to be a storage room in other temperature zone such as cold room 504 and temperature changeable room 505. In this case, it becomes possible to make developments in order to achieve various purpose.

In the present example, the antibacterial device employed is provided with an atomizing device which sprays mist. However, in case there is provided an electrostatic mist making device the same as in the present example, and discharge is executed without cooling pin 534, then the electrostatic mist making device serves as an antibacterial device which sprays no liquid mist but may generate gaseous ozone and minus ion.

In this way, when the electrostatic mist making device is used as an ozone generator or minus ion generator without displaying mist, it is possible to install the device as another type of ozone generator specifically described in the example 2. In that case, no cooling pin is needed, and it is of course unnecessary to cool the cooling pin. Accordingly, it is naturally possible to install the electrostatic mist making device as antibacterial device at an optional position in the refrigerator. Also, even in case of using a cooling pin, it is effective to use the cooling pin for the purpose of positioning the atomizing device instead of using it as an electrode of making to mist. In this case, it is possible to properly dispose the cooling pin in the inside wall of the refrigerator. Accordingly, when installed in a heat insulating wall, it can be accurately disposed in the inside wall of the refrigerator without looseness, and it becomes possible to use in common same atomizing device which displays mist as in the refrigerator.

As described above, in the present example, fine mist is properly effectively sprayed to fruits or vegetables stored in vegetable room 507 by means of electrostatic mist making device 531, and further, light source 590 intermittently applies blue light and green light to the fruits or vegetables. As a result, normal photosynthesis of fruits or vegetables is promoted, and ecological defense reaction of fruits or vegetables is excited. Accordingly, it is possible to increase nutrients such as vitamin without withering of the vegetables and fruits during storage, enabling the maintenance of high nutrient value and quality of the foods stored.

### Example 6

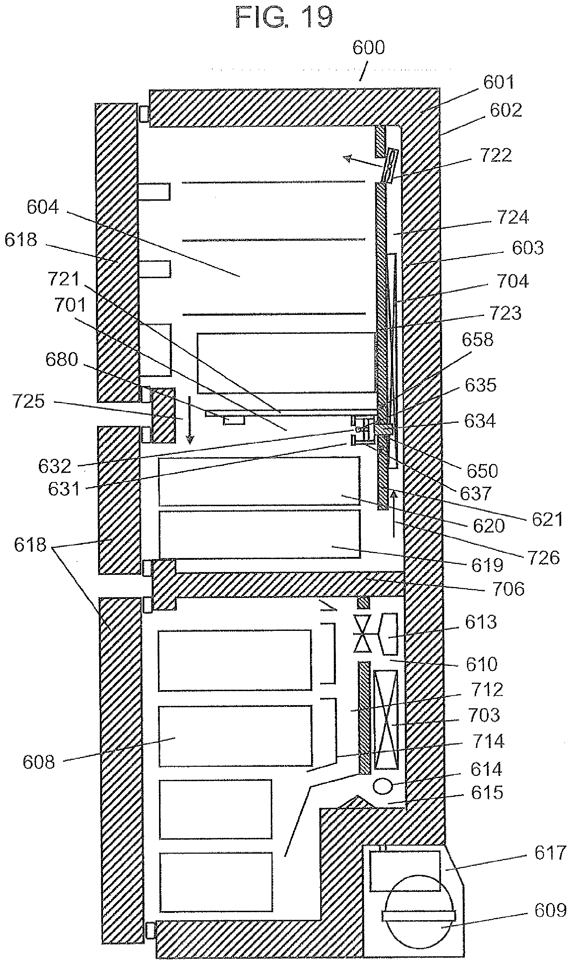

Fig. 19 is a sectional view of a refrigerator in the example 6. In this example, described in detail is only the difference in configuration from the examples and embodiment described in detail. For the portions having same configurations or same in technical concept as in the examples and embodiment described in detail, the description is omitted.

Particularly, in this example, another type of atomizing device that is antibacterial device of the example 5 is mainly described, and the light source is not described in detail, but the same technology as for the light source described in the examples and embodiment is applied to the light source.

As shown in the figure, in this example, cold room 604 as first storage room is arranged at the uppermost portion of refrigerator 600. Thermo-change room 701 that can be thermally changed to the vegetable room temperature of about 5 °C is disposed under cold room 604-Freezer room 608 is arranged under thermo-change room 701. Heat insulating wall 706 as partition is disposed between thermo-change room 701 and freezer room 608. Refrigerator 600 is formed of inner box 603, outer box 602, and foamed heat insulator 601 disposed between them.

Thermo-change room 701 is divided by partition plate 721 for partitioning the temperature zone of cold room 604 and thermo-change room 701, partition wall (not shown) ensuring a sufficient level of insulation for partitioning the temperature zone of thermo-change room 701, partition plate 621 and door 618 at the back of thermo-change room 701. Thermo-change room discharge port 725 as cold air passage is disposed in a part of partition plate 721. There are provided upper and lower two food containers 620, 619 in thermo-change room 701.

Light source 680 is disposed on the underside of partition plate 721. Light source 680 is based on the same technology as for the light source described in the examples and embodiment. Accordingly, as already described, the detailed description of light source 680 is omitted here. However, in this example, the configurations and effects are naturally same as those of the light source described in the examples and embodiment.

Cold room partition plate 723 is disposed at the back of cold room 604 and thermo-change room 701. Cold room partition plate 723 is extended to the back of thermo-change room 701, and the back portion of thermo-change room 701 serves as partition plate 621. Cold room partition plate 723 is arranged away from the inside surface of cold room 600, cold room air passage 724 is formed between them. Thermo-change room suction port 726 is formed at the lower end portion of cold room air passage 724. High-temperature side evaporator 704 is disposed in cold room air passage 724. Cold room fan 722 is installed above the high-temperature side evaporator 704, which sends cold air to cold room 604. Also, electrostatic mist making device 631 that is antibacterial device is disposed on the thermo-change room 701 side of a part of back partition plate 721 of thermo-change room 701.

Partition plate 621 at the back of thermo-change room 701 is mainly formed from resin such as ABS and insulating material such as foamed styrol. Electrostatic mist making device 631 as antibacterial device is installed on a part of the inner side of partition plate 621 (cold room partition plate 723).

Cold room partition plate 723 with electrostatic mist making device 631 fixed thereon is provided with cooling pin 634 that is heat transfer connecting member disposed on electrostatic mist making device 631. Also, the temperature is adjusted in order to prevent excessive dew from gathering on peripheral surfaces including electrode of making to mist 635 that is atomizing tip portion. Cooling pin heater 658 is installed in the vicinity of electrostatic mist making device 631 of cold room partition plate 723.

Cooling pin 634 as heat transfer connecting member is fixed on outer case 637, and cooling pin 634 itself is protruded from outer case 637 in the form of convex. The shape of cooling pin 634 includes a convex at the opposite side of electrode of making to mist 635. The convex is fitted into concave 650 formed in a part of cold room partition plate 723. In this case, the rear side of cooling pin 634 as heat transfer conecting member is positioned in the vicinity of high-temperature side evaporator 704.

Evaporator 703 is disposed at the rear of freezer room 608, and defrost heater 614 is disposed under evaporator 703. Cooling fan 613 is disposed above the evaporator 703. Cold air cooled by evaporator 703 is delivered from cold air discharge port 610 into freezer room 608 by means of cooling fan 613, and is returned to evaporator 703 from cold air suction port 615. The cold air delivered into freezer room 608 from cold air discharge port 610 is sent to each part of freezer room 608 from freezer room discharge air passage 712 formed by back partition wall 714. Refrigerant is circulated to evaporator 703 by means of compressor 609 disposed in machine room 617.

The operation and action of the refrigerator having the above configuration will be described in the following. When the three-way valve (not shown) is opening the passage to the high-temperature side capillary (not shown), cold room 604 and thermo-change room 701 are cooled. Then, the temperature detector disposed in cold room 604 or thermo-change room 701 determines the operation of the three-way valve and cold room fan 722. In this way, the temperatures of cold room 604 and thermo-change room 701 are kept constant.

Thermo-change room 701 is a room capable of optional setting of the temperature. It is possible to change the temperature in a range from the partial temperature zone of about - 2 °C to the vegetable room temperature of about 5 °C and the wine room temperature of about 12 °C. Accordingly, it is sometimes used as a vegetable room for storing fruits or vegetables.

When the temperature of thermo-change room 701 is set to about the vegetable storing temperature, for example, 2 °C or over, electrostatic mist making device 631 is operated to enhance the freshness preservation of the foods stored. Electrostatic mist making device 631 is installed in a part of the place where back partition plate 721 of thermo-change room 701 is in a relatively high humidity environment. Particularly, the rear of cooling pin 634 is in the vicinity of high-temperature side evaporator 704.

In high-temperature side evaporator 704 at the rear of cooling pin 634, the temperature of the heat transfer member such as refrigerant pipe or fin becomes nearly - 15 to - 25 °C as the cooling system is operated. Accordingly, as a result of such heat transfer, cooling pin 634 as heat transfer cooling member is cooled to about 0 to - 10 °C for example. In this case, since cooling pin 634 is an excellent heat transfer member, it is easy to transfer low-temperature heat, and electrode of making to mist 635 as atomizing tip portion is also indirectly cooled to about 0 to - 10 °C via cooling pin 634.

When the three-way valve is set to open the high-temperature side capillary passage, cold room 604 and thermo-change room 701 are shifted to cooling mode, and then the thermo-change room is in a low humidity condition. Also, when the three-way valve is set to close the high-temperature side capillary passage, the thermo-change room is shifted to a relatively high humidity condition. Further, at the same time, it is possible to melt and remove frost sticking to high-temperature side evaporator by operating cold room fan 722. In that case, the internal space of thermo-change room 701 is kept at relatively high humidity. Accordingly, it is possible to perform atomization even in case of temperature rise of high-temperature side evaporator 704 at the rear of cooling pin 634.

When the temperature setting of thermo-change room 701 is for the vegetable room, the temperature ranges from 2 °C to 7 °C, and the humidity is relatively high due to transpiration from vegetables. Accordingly, in electrode of making to mist 635 that is atomizing tip portion of electrostatic mist making device 631, water is generated on electrode of making to mist 635 including the tip when the temperature becomes lower than the dew point. In this way, water drop sticks to electrode of making to mist 635 and it is possible to generate fine mist containing radical due to high voltage application.

The fine mist passes through mist port 632 formed in outer case 637 of electrostatic mist making device 631 and is sprayed into thermo-change room 701. Since the fine mist is very small-sized fine particles, it is very diffusive, and the fine mist entirely reaches thremo-change room 701. Fine mist sprayed is generated by high voltage discharge, which is therefore electrified with minus charge. On the other hand, fruits or vegetables having plus charge are stored in thermo-change room 701. Accordingly, atomized mist is liable to gather on the surfaces of vegetables, thereby enhancing the freshness preservation.

It is not limited to the above-mentioned temperature provided that mist can be sprayed. For example, even in case the thermo-change room is set to the partial temperature of about - 2 °C, ice temperature of about 0 °C, or chilled temperature zone of about 1 °C, it is possible to store the foods for a long period of time because the sterilization is enhanced by fine mist sticking to fresh food surfaces with mist sprayed when it can be determined that electrostatic mist making device 631 is capable of spraying mist.

Also, it is possible to realize higher efficiency mist spray by interlocking the operation of cold room fan 722 with the operation of electrostatic mist making device 631.
Further, it is possible to realize more reliable state of atomization by arranging a heater for temperature adjustment in the vicinity of cooling pin 634 of electrostatic mist making device 631 because it enables the temperature control of the electrode of making to mist and the water quantity adjustment of the atomizing tip portion.

As described above, in the present example, light source 680 illuminates the fruits or vegetables with blue light and green light combined. Accordingly, high-quality fruits or vegetables enhanced in nutrient value can be stored, and at the same time, as it is easier to associate the illumination with the food to be stored, the user is able to see the temperature condition in the storage room at first sight.

Also, in the present example, there is provided electrostatic mist making device 631 as antibacterial device which spray radical-contained mist to prevent the increase of bacteria. However, such an antibacterial function is obtained due to the radical generated by high voltage application. Accordingly, mist is not absolute necessity for a deodorizer, but using radical-contained mist in the antibacterial device, radical that is generally very short in endurance time and easy to disappear is covered with mist and suspended. Therefore, this example is characterized in that the endurance time of radical existing is greatly prolonged. Also, in the case of mist, it is possible to enhance the sterilizing effect because liquid mist particles stick to the vegetable surfaces unlike the case of using gas.

In the present example, there is provided electrostatic mist making device 631 that sprays mist as an antibacterial device.
However, when there is provided electrostatic mist making device 631 the same as in the present example, and discharge is executed without cooling pin 634, then the electrostatic mist making device serves as an antibacterial device which sprays no liquid mist but may generate gaseous ozone and minus ion. This is the same as described in the example 5.

As described above, the refrigerator of the present invention includes a storage room for storing fruits or vegetables in the refrigerator, and a plurality of light sources for applying the light to the space in the storage room. The light source combines the light of a wavelength that enables the penetration of light into the surface of fruits or vegetables with the light of a wavelength that enables the penetration of light into the interior of fruits or vegetables for the purpose of illumination.

Thus, the storageability is improved by the illumination, and the using convenience can be improved by visually showing the improvement of storageability to the user.

Also, the refrigerator of this example uses blue light having a wavelength that enables the penetration of light into the surface of fruits or vegetables.

In this way, vitamin C that is anti-oxidative substance is produced by photosynthesis and ecological defense reaction of fruits or vegetables by illumination of blue light, and it can be used to properly increase the nutrients of fruits or vegetables, and the ecological defense reaction can be properly excited to increase the nutrients in the refrigerator.

Further, as the effect of blue light illumination capable of obtaining bacteriostatic action that suppresses the increase of microorganism bacteria has been already demonstrated, it is very effective because the bcteriostatic effect of suppressing the increase of bacteria on vegetable surfaces in addition to the ecological defense reaction in the surfaces of fruits or vegetables.

Also, since the color of blue light visually gives a feeling of refreshment to human being, the user is able to sensually feel that the vegetables are stored at a high level of cleanness and freshness.

Further, the refrigerator of the present invention uses green light that is a light having a wavelength enabling the penetration of light into fruits or vegetables.

Accordingly, with green light having a light receptor illuminated into vegetables, the light can be penetrated into the vegetables, and the internal ecological defense reaction can be promoted.

Also, since the wavelength of green light has little side effects to fruits or vegetables in particular out of visible lights, it is effective because even when it is applied at a relatively high level of illumination that promotes the internal photosynthesis, the amount of vitamin can be increased without deterioration of fruit and vegetable qualities.

Thus, green light does not give influences to the growth of vegetables, and therefore, even when the light is applied at a high level of illumination enough to increase vitamin, it causes no quality deterioration of fruits or vegetables such as transpiration of water in vegetables due to active photosynthesis, and the quality is same as in the case of storage in the dark. Also, light of other wavelength is reflected from the vegetable surfaces, while green light penetrates into vegetables, and therefore, when green light is illuminated to thick fruits or vegetables such as paprika, it promotes the production of vitamin C due to internal photosynthesis.

Further, the refrigerator of the present invention is configured in that the light source simultaneously illuminates the light of a wavelength that enables the penetration of light into the surface of fruit and vegetable and the light of a wavelength that enables the penetration of light into the interior of fruit and vegetable, and the level of illumination of the light source to fruits or vegetables is 5 to 500Lx.

In this way, ensuring the illumination to vegetables necessary for production of vitamin C, it is possible to prevent quality deterioration due to transpiration and phototropism of vegetables under intensive light.

Also, the refrigerator of the present invention is configured in that the illumination of light source to fruits or vegetables is higher in the case of light of a wavelength that enables the penetration of light into the interior of fruits or vegetables than in the case of light of a wavelength that enables the penetration of light into the surface of fruits or vegetables.

Accordingly, vitamin C is efficiently produced in the surface and interior of vegetables.

Also, the refrigerator of the present invention is configured in that the light source intermittently illuminates at least one of the light of wavelength that enables the penetration of light into the surface of fruits or vegetables and the light of wavelength that enables the penetration of light into the interior of fruits or vegetables.

Thus, the level of stimulation to vegetables is higher in intermittent illumination than in continuous illumination, and in addition to production of vitamin C due to photosynthesis, it is possible to promote the production of vitamin C due to the defense reaction of vegetables.

Also, in the refrigerator of the present invention, the light source performs intermittent illumination with turned-off intervals during which neither the light of a wavelength that enables the penetration of light into the surface of fruits or vegetables nor the light of a wavelength that enables the penetration of light into the interior of fruits or vegetables is illuminated.

Thus, when turned-off intervals during which no light is illuminated at all with the dark maintained are included, the ecological defense reaction can be properly excited by the light illuminated after the turned-off intervals. Accordingly, with such turned-off intervals included, even in case of single color illumination after the end of turned-off interval, the brightness and darkness of the light applied to the vegetables by illumination of the light source can be properly provided, and it is possible to promote the ecological defense reaction.

Further, the refrigerator of the present invention is configured in that the light of a wavelength that enables the penetration of light into the surface of fruits or vegetables and the light of a wavelength that enables the penetration of light into the interior of fruits or vegetables are directly applied to fruits or vegetables by the light source.

Accordingly, it is possible to prevent variation or lowering in illumination of specific wavelength that is effective to produce vitamin C via objects interposed, and the production of vitamin C can be promoted by direct illumination to vegetables.

Also, the refrigerator of the present invention is configured in that the light of a wavelength that enables the penetration of light into the interior of fruits or vegetables is green light whose central wavelength is 520 nm.

In this way, it is possible to realize the penetration of light into the interior of vegetables by applying the green light having a light receptor into the interior of vegetables, thereby enabling the promotion of internal photosynthesis.

Also, the wavelength of green light has little side effects to fruits or vegetables in particular out of visible lights and, therefore, it hardly causes bad influences to the fruits or vegetables even in case of a relatively high level of illumination enough to promote internal photosynthesis.

### INDUSTRIAL APPLICABILITY

The refrigerator of the present invention improves the storageability of fruits or vegetables by application of light to fruits or vegetables, and visually shows the improvement of storageability of fruits or vegetables to the user, improving the using convenience, and thereby, it is possible to provide a higher quality refrigerator. Accordingly, the refrigerator is suited for storing fruits or vegetables in particular for a long period of time.

## Claims

1. A refrigerator comprising: a storage room (120) for storing fruits or vegetables; a light source (200) provided on the top surface and in the inner side of the storage room (120); a lower container (121a) provided in the storage room (120); an upper container (121b) arranged at a part of an upper part of the lower container (121a) **characterized in that** the upper container (121b) is composed of a light penetrable material; a lid (141) being formed from a material allowing penetration of light and configured to be closed when the lower container (121a) and the upper container (121b) are in a state of being housed in the storage room (120) and to stay at the storage room (120) when the lower container (121a) and the upper container (121b) are in a state of being drawn out and preventing transpiration of water out of the upper container (121b) and the lower container (121a); and a cold air discharge port (213) configured to supply a cold air into the storage room (120), wherein the cold air discharge port (213) is configured to supply the cold air into a storage space of the lower container (121a) such that the cold air flows indirectly into the upper container (121b) through the lower container (121a) so that the cold air does not directly flow into the upper container (121b), and wherein the light source (200) is arranged just above the opening of lower container (121a) and the light is indirectly applied into the upper container (121b) via the upper container (121b) composed of light penetrable material.

2. The refrigerator of claim 1, wherein the light source (200) combines a light with a wavelength for penetrating the light into surface of the fruits or vegetables and a light with a wavelength for penetrating the light into interior of the fruits or vegetables and irradiates the fruits or vegetables.

3. The refrigerator of claim 2, wherein a blue light is used as the light with the wavelength for penetration of the light into surfaces of the fruits or vegetables.

4. The refrigerator of claim 2 or 3, wherein a green light is used as the light with the wavelength for penetration of the light into interiors of the fruits or vegetables.

5. The refrigerator of any one of claims 2 to 4, wherein the light source (200) simultaneously illuminates the light of the wavelength that enables the penetration of the light into surfaces of the fruits or vegetables and the light of the wavelength that enables the penetration of the light into interiors of the fruits or vegetables, and a level of illumination of the light source (200) to the fruits or vegetables is 5 to 500 Lx.

6. The refrigerator of any one of claims 2 to 5, wherein the level of illumination of the light of the wavelength that enables the penetration of the light into the interiors of the fruits or vegetables is higher than the level of illumination of the light of the wavelength that enables the penetration of the light into the surfaces of the fruits or vegetables.

## Patentansprüche

1. Kühlschrank, der umfasst: einen Speicherraum (120) zum Speichern von Früchten oder Gemüse; eine Lichtquelle (200), die an einer oberen Oberfläche und in der Innenseite des Speicherraums (120) zur Verfügung gestellt wird; einen unteren Behälter (121a) der in dem Speicherraum (120) zur Verfügung gestellt wird; einen oberen Behälter (121b), der an einem Teil eines oberen Teils des unteren Behälters (121a) angeordnet ist, **dadurch gekennzeichnet, dass** der obere Behälter (121b) aus einem lichtdurchlässigen Material besteht; einen Deckel (141), der aus einem Material ausgebildet ist, das die Durchdringung von Licht zulässt und konfiguriert ist, um geschlossen zu sein, wenn sich der untere Behälter (121a) und der obere Behälter (121b) in einem Zustand befinden, in dem sie in dem Speicherraum (120) aufgenommen werden und am Speicherraum (120) verbleiben, wenn sich der untere Behälter (121a) und der obere Behälter (121b) in einem Zustand befinden, in dem sie herausgezogen sind und die Verdunstung von Wasser aus dem oberen Behälter (121b) und dem unteren Behälter (121a) verhindern; und einen Kaltluftauslassanschluss (213), der konfiguriert ist, um Kaltluft in den Speicherraum (120) zuzuführen, wobei der Kaltluftauslassanschluss (213) konfiguriert ist, um Kaltluft in den Speicherraum des unteren Behälters (121a) so zuzuführen, dass die Kaltluft indirekt in den oberen Behälter (121b) durch den unteren Behälter (121a) strömt, so dass die Kaltluft nicht direkt in den oberen Behälter (121b) strömt, und wobei die Lichtquelle (200) direkt über der Öffnung des unteren Behälters (121a) angeordnet ist und das Licht indirekt in den oberen Behälter (121b) über den oberen Behälter (121b) bereitgestellt wird, der aus dem lichtdurchlässigen Material besteht.

2. Kühlschrank nach Anspruch 1, wobei die Lichtquelle (200) ein Licht mit einer Wellenlänge zum Durchdringen des Lichts in die Oberfläche der Früchte oder des Gemüses und ein Licht mit einer Wellenlänge zum Durchdringen des Lichts in das Innere der Früchte oder des Gemüses kombiniert und die Früchte oder das Gemüse bestrahlt.

3. Kühlschrank nach Anspruch 2, wobei ein blaues Licht als das Licht mit einer Wellenlänge zum Durchdringen des Lichts in die Oberflächen der Früchte oder des Gemüses verwendet wird.

4. Kühlschrank nach Anspruch 2 oder 3, wobei ein grünes Licht als das Licht mit einer Wellenlänge zum Durchdringen des Lichts in das Innere der Früchte oder des Gemüses verwendet wird.

5. Kühlschrank nach einem der Ansprüche 2 bis 4, wobei die Lichtquelle (200) gleichzeitig das Licht der Wellenlänge, die das Durchdringen des Lichts in die Oberflächen der Früchte oder des Gemüses ermöglicht, und das Licht der Wellenlänge ausstrahlt, die das Durchdringen des Licht in das Innere der Früchte oder des Gemüses ermöglicht, wobei ein Beleuchtungspegel der Lichtquelle (200) für die Früchte oder das Gemüse 5 bis 500 Lx beträgt.

6. Kühlschrank nach einem der Ansprüche 2 bis 5, wobei der Beleuchtungspegel des Lichts von der Wellenlänge, die das Durchdringen des Licht in das Innere der Früchte oder des Gemüses ermöglicht, höher ist als der Beleuchtungspegel des Lichts von der Wellenlänge, die das Durchdringen des Lichts in die Oberflächen der Früchte oder des Gemüses ermöglicht.

## Revendications

1. Réfrigérateur comprenant : une chambre de stockage (120) destinée à stocker des fruits ou légumes ; une source lumineuse (200) disposée à la surface supérieure et dans le côté intérieur de la chambre de stockage (120) ; un récipient inférieur (121a) disposé dans la chambre de stockage (120) ; un récipient supérieur (121b) disposé sur une partie d'une partie supérieure du récipient inférieur (121a), **caractérisé en ce que** le récipient supérieur (121b) est composé d'un matériau laissant pénétrer la lumière ; un couvercle (141) étant formé d'un matériau permettant la pénétration de la lumière et conçu pour être fermé lorsque le récipient inférieur (121a) et le récipient supérieur (121b) sont dans l'état d'être logés dans la chambre de stockage (120), et pour rester dans la chambre de stockage (120) lorsque le récipient inférieur (121a) et le récipient supérieur (121b) sont dans un état d'être retirés et empêchant la transpiration à l'extérieur du récipient supérieur (121b) et du récipient inférieur (121a) ; et un orifice d'évacuation d'air froid (213) conçu pour apporter un air froid dans la chambre de stockage (120), l'orifice d'évacuation d'air froid (213) étant conçu pour apporter l'air froid dans l'espace de stockage du récipient inférieur (121a) de manière que l'air froid circule indirectement dans le récipient supérieur (121b) à travers le récipient inférieur (121a) de manière que l'air froid ne circule pas directement dans le récipient supérieur (121b), et la source lumineuse (200) étant disposée juste au-dessus de l'ouverture du récipient inférieur (121a) et la lumière étant indirectement appliquée dans le récipient supérieur (121b) par le biais du récipient supérieur (121b) composé de matériau laissant pénétrer la lumière.

2. Réfrigérateur selon la revendication 1, dans lequel la source lumineuse (200) combine une lumière avec une longueur d'onde destinée à faire pénétrer la lumière dans la surface des fruits ou légumes et une lumière avec une longueur d'onde destinée à faire pénétrer la lumière dans l'intérieur des fruits ou légumes et émet de la lumière sur les fruits ou légumes.

3. Réfrigérateur selon la revendication 2, dans lequel une lumière bleue est utilisée en tant que lumière avec la longueur d'onde destinée à la pénétration de la lumière dans des surfaces des fruits ou légumes.

4. Réfrigérateur selon la revendication 2 ou 3, dans lequel une lumière verte est utilisée en tant que lumière avec la longueur d'onde destinée à la pénétration de la lumière dans l'intérieur des fruits ou légumes.

5. Réfrigérateur selon l'une quelconque des revendications 2 à 4, dans lequel la source lumineuse (200) met simultanément en service l'éclairage de la longueur d'onde qui permet la pénétration de la lumière dans les surfaces des fruits ou légumes et l'éclairage de la longueur d'onde qui permet la pénétration de la lumière dans l'intérieur des fruits ou légumes, et un niveau d'éclairage de la source lumineuse (200) sur les fruits ou légumes est de 5 à 500 Lx.

6. Réfrigérateur selon l'une quelconque des revendications 2 à 5, dans lequel le niveau d'éclairage de la lumière de la longueur d'onde qui permet la pénétration de la lumière dans l'intérieur des fruits ou légumes est supérieur au niveau d'éclairage de la lumière de la longueur d'onde qui permet la pénétration de la lumière dans la surface des fruits ou légumes.
